(19) Europäisches Patentamt
European Patent Office
Office européen des brevets

(11) EP 4 768 457 A1

(12) **EUROPEAN PATENT APPLICATION**
published in accordance with Art. 153(4) EPC

(43) Date of publication:
**01.07.2026 Bulletin 2026/27**

(21) Application number: **24856495.7**

(22) Date of filing: **21.08.2024**

(51) International Patent Classification (IPC):
***C03C 27/12*** *(2006.01)*

(52) Cooperative Patent Classification (CPC):
**B32B 17/00**

(86) International application number:
**PCT/JP2024/029713**

(87) International publication number:
**WO 2025/041807 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.08.2023 JP 2023135814**

(71) Applicant: **Sekisui Chemical Co., Ltd.**
**Osaka-shi, Osaka 530-8565 (JP)**

(72) Inventors:
- **INUI, Hiroaki**
**Koka-shi, Shiga 528-8585 (JP)**
- **MIYAMOTO, Satoshi**
**Koka-shi, Shiga 528-8585 (JP)**
- **MUKOHATA, Daisuke**
**Koka-shi, Shiga 528-8585 (JP)**

(74) Representative: **Ter Meer Steinmeister & Partner Patentanwälte mbB**
**Nymphenburger Straße 4**
**80335 München (DE)**

# (54) INTERLAYER FILM FOR LAMINATED GLASS, LAMINATED GLASS, AND PRODUCTION METHOD FOR INTERLAYER FILM FOR LAMINATED GLASS

(57) The interlayer film for laminated glass (1) of the present invention comprises a functional film (10) and one or more first polymer sheets (20a, 20b) provided on one surface (11) of the functional film (10); wherein in a projected view in the thickness direction, the functional film (10) is included in at least a region of the first polymer sheet (20a) that is in contact with the functional film among the one or more first polymer sheets (20a, 20b); and the interlayer film further comprises one or more gap filler polymer sheets (30) provided on a surface on the side opposite to the functional film side of the first polymer sheet(s) (20a, 20b). The laminated glass according to the present invention comprises a pair of glass plates, and the interlayer film for laminated glass 1 of the present invention provided between the pair of glass plates. According to the present invention, it is possible to provide an interlayer film for laminated glass, the interlayer film being capable of suppressing the occurrence of steps in the thickness direction and also reducing a gap that occurs at the end of a functional film; laminated glass; and a method for producing the interlayer film for laminated glass.

Fig. 1

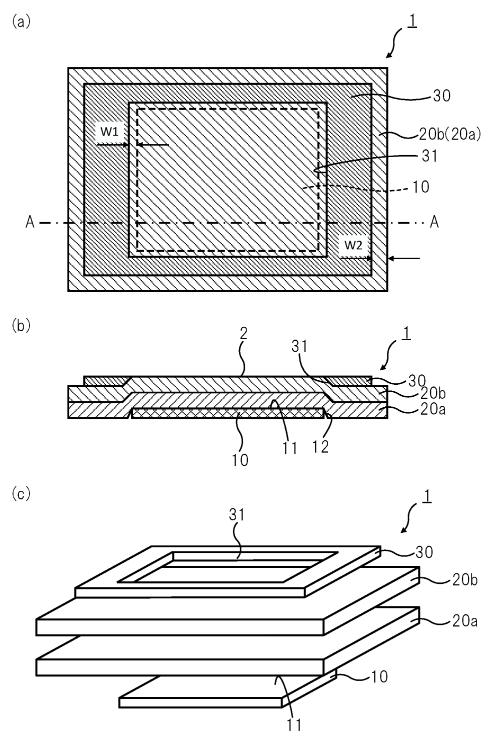


EP 4 768 457 A1

## Description

### Technical Field

The present invention relates to an interlayer film for laminated glass, laminated glass, and a method for producing an interlayer film for laminated glass.

### Background Art

Conventionally, laminated glass, which is produced by inserting an interlayer film between two glass plates to integrate them, has been widely known. The interlayer film is often made of plasticized polyvinyl acetal, which is a polyvinyl acetal resin mixed with a plasticizer. Even if laminated glass is broken by external impact, few glass fragments are scattered, and laminated glass is thus safe. So, it is widely used as window glass for vehicles such as automobiles, aircraft, buildings, etc.

Laminated glass is generally produced in the following manner: an interlayer film is placed between two glass plates, followed by the preliminary degassing step; and the resultant is subjected to the autoclave (ACV) step of heating and pressurizing it under conditions of a temperature ranging from about 130°C to 140°C and a pressure of about 1.3 MPa to compression-bond the glass plates and the interlayer film.

In recent years, it has been required in some cases to impart various functions to laminated glass, and for example, a functional film such as a light-controlling body may be placed between two glass plates. It is known that when incorporating a functional film such as a light-controlling body into laminated glass, two films are provided and that the functional film is sandwiched between the two films to form an integrated film that can be used as an interlayer film.

Also, the following is known: as intermediate layers constituting the interlayer film, an intermediate layer with an opening and an intermediate layer without an opening are provided; and then, glass plates and the intermediate layers are laminated to form a structure of the glass plate/the intermediate layer without an opening/the intermediate layer with a functional film placed inside the opening/intermediate layer without an opening/the glass plate, thereby integrating the glass plates, the interlayer film, and the functional film (see, for example, Patent Literature 1).

### Citation List

### Patent Literature

PTL 1: JP 2009-534283A

### Summary of Invention

### Technical Problem

In an interlayer film obtained by sandwiching a functional film between two films, the dimension of the functional film is generally smaller than each film. Accordingly, the interlayer film disadvantageously includes steps formed between a portion where the functional film is provided and a portion where the same is not provided, resulting in uneven thickness.

On the other hand, the use of an intermediate layer having an opening as in Patent Literature 1 can suppress the occurrence of steps in the interlayer film between a region where the functional film is present and a region where the functional film is not present, and can realize the uniform thickness throughout the entire interlayer film.

However, when the glass plate, the interlayer film, and the functional film are subjected to thermocompression bonding together using an autoclave or the like, the position of the intermediate layer having the opening may shift or the dimension thereof may change, which may result in a problem of gap generating at the edge of the functional film.

An object of the present invention is to provide an interlayer film for laminated glass, the interlayer film being capable of suppressing the occurrence of steps in the thickness direction and also reducing a gap that occurs at the edge of a functional film; laminated glass; and a method for producing the interlayer film for laminated glass.

### Solution to Problem

As a result of intensive studies, the inventors have found that the above problems can be solved by considering the arrangement of a gap filler polymer sheet that suppresses the occurrence of steps in the interlayer film between a region where a functional film is present and a region where a functional film is not present, and have completed the present invention described below. In other words, the present invention provides the following [1] to [18].

[1] An interlayer film for laminated glass, comprising a functional film and one or more first polymer sheets provided on one surface of the functional film, wherein:

in a projected view in the thickness direction, the functional film is included in at least a region of the first polymer sheet that is in contact with the functional film, among the one or more first polymer sheets; and
the interlayer film for laminated glass further comprises one or more gap filler polymer sheets provided on a surface on the side opposite to the functional film side of the first polymer sheet.

[2] The interlayer film for laminated glass according to [1] above, wherein a surface on the gap filler polymer sheet side of the interlayer film has a surface roughness ($R_{zjis94}$) of 1 $\mu$m or more and 100 $\mu$m or less.
[3] The interlayer film for laminated glass according to [1] or [2] above, further comprising a second polymer sheet provided on the other surface of the functional film.
[4] The interlayer film for laminated glass according to [3] above, wherein a surface on the second polymer sheet side of the interlayer film has a surface roughness ($R_{zjis94}$) of is 1 $\mu$m or more and 100 $\mu$m or less.
[5] The interlayer film for laminated glass according to [3] or [4] above, wherein:

in a projected view in the thickness direction, the distance between the outer circumference of the first polymer sheet and the outer circumference of the gap filler polymer sheet is 0 mm or more and 10 mm or less;
in a projected view in the thickness direction, the distance between the outer circumference of the second polymer sheet and the outer circumference of the gap filler polymer sheet is 0 mm or more and 10 mm or less;
in a projected view in the thickness direction, the distance between the outer circumference of the first polymer sheet and the outer circumference of the second polymer sheet is 0 mm or more and 10 mm or less.

[6] The interlayer film for laminated glass according to any one of [1] to [5] above, wherein the gap filler polymer sheet comprises an opening in a region overlapping with the functional film in a projected view in the thickness direction.
[7] The interlayer film for laminated glass according to [6] above, wherein the gap filler polymer sheet comprising the opening comprises a plurality of polymer sheets arranged in the planar direction.
[8] The interlayer film for laminated glass according to [6] or [7] above, wherein, in a projected view in the thickness direction, the distance between the inner circumference of the opening of the gap filler polymer sheet and the outer circumference of the functional film is 5 mm or less over the entire circumference.
[9] The interlayer film for laminated glass according to any one of [1] to [8] above, wherein at least one of the first polymer sheet or the gap filler polymer sheet comprises at least one thermoplastic resin selected from the group consisting of a polyvinyl acetal resin and an ethylene-vinyl acetate copolymer resin.
[10] The interlayer film for laminated glass according to any one of [1] to [9] above, wherein the functional film is a film having a function of absorbing or reflecting specific light.
[11] The interlayer film for laminated glass according to any one of [1] to [10] above, wherein the functional film comprises a polyethylene terephthalate resin.
[12] The interlayer film for laminated glass according to any one of [1] to [11] above, wherein the functional film is a P-polarized reflective film, a holographic film, a heat ray reflective film, a light-controlling film, a display element film, a transparent conductive film, a touch sensor film, a circuit film, a film for solar power generation, or an electrically controllable film.
[13] The interlayer film for laminated glass according to any one of [3] to [5] above, wherein the second polymer sheet comprises at least one thermoplastic resin selected from the group consisting of a polyvinyl acetal resin and an ethylene-vinyl acetate copolymer resin.
[14] The interlayer film for laminated glass according to any one of [1] to [13] above, further comprising a third polymer sheet provided on a surface on the side opposite to the first polymer sheet side of the gap filler polymer sheet.
[15] The interlayer film for laminated glass according to any one of [3] to [5] above, wherein the surface on the gap filler polymer sheet side of the interlayer film and the surface on the second polymer sheet side of the interlayer film have regularly shaped or randomly shaped unevenness.
[16] The interlayer film for laminated glass according to any one of [3] to [5] above, wherein at least one of the surface on the gap filler polymer sheet side or the surface on the second polymer sheet side is protected with a protective release film.
[17] A method for producing an interlayer film for laminated glass according to any one of [1] to [16] above, comprising a step of laminating a functional film, a first polymer sheet, and a gap filler polymer sheet such that the functional film, the first polymer sheet, and the gap filler polymer sheet are arranged in this order.
[18] A laminated glass, comprising a pair of glass plates and the interlayer film for laminated glass according to any one of [1] to [16] above provided between the pair of glass plates.

## Advantageous Effects of Invention

According to the present invention, provided are an interlayer film for laminated glass, the interlayer film being capable of suppressing the occurrence of steps in the thickness direction and also reducing the gap that occurs at the edge of a functional film; laminated glass; and a method for producing the interlayer film for laminated glass.

## Brief Description of Drawings

[Fig. 1] Fig. 1(a) is a plan view of the interlayer film for laminated glass of a first embodiment of the present invention. Fig. 1(b) is a cross-sectional view taken along line A-A of Fig. 1(a), and Fig. 1(c) is an exploded view of the interlayer film for laminated glass of the first embodiment of the present invention.

[Fig. 2] Fig. 2 is a cross-sectional view of a modified example of the interlayer film for laminated glass of the first embodiment of the present invention.

[Fig. 3] Fig. 3(a) is a plan view of the interlayer film for laminated glass of a second embodiment of the present invention, Fig. 3(b) is a cross-sectional view taken along line A-A of Fig. 3(a), and Fig. 3(c) is an exploded view of the interlayer film for laminated glass of the second embodiment of the present invention.

[Fig. 4] Fig. 4 is a cross-sectional view of a modified example of the interlayer film for laminated glass of the second embodiment of the present invention.

[Fig. 5] Fig. 5 is an exploded view of an interlayer film for laminated glass of a third embodiment of the present invention.

[Fig. 6] Fig. 6 is a cross-sectional view of a modified example of the interlayer film for laminated glass of the third embodiment of the present invention.

[Fig. 7] Fig. 7 is an exploded view of an interlayer film for laminated glass of a fourth embodiment of the present invention.

[Fig. 8] Fig. 8 is a cross-sectional view of a modified example of the interlayer film for laminated glass of the fourth embodiment of the present invention.

[Fig. 9] Fig. 9 is a cross-sectional view of an interlayer film for laminated glass of a fifth embodiment of the present invention.

[Fig. 10] Fig. 10 is a cross-sectional view of a modified example of the interlayer film for laminated glass of the fifth embodiment of the present invention.

[Fig. 11] Fig. 11 is a cross-sectional view of laminated glass showing an example of the layer structure of the laminated glass of the present invention.

[Fig. 12] Fig. 12 is a cross-sectional view of laminated glass showing an example of the layer structure of the laminated glass of the present invention.

[Fig. 13] Fig. 13 is a diagram for illustrating the measurement of the thickness of the interlayer film for laminated glass in the examples.

[Fig. 14] Fig. 14(a) is a diagram for illustrating the structure of the interlayer film for laminated glass of Examples 1, 2, 4, and 5, Fig. 14(b) is a diagram for illustrating the structure of the interlayer film for laminated glass of Example 3, and Fig. 14(c) is a diagram for illustrating the structure of the interlayer film for laminated glass of Example 6. Fig. 14(d) is a diagram for illustrating the structure of the interlayer film for laminated glass of Comparative Example 1, and Fig. 14(e) is a diagram for illustrating the structure of the interlayer film for laminated glass of Comparative Example 2.

[Fig. 15] Fig. 15(a) is a diagram for illustrating the gap filler polymer sheet in the interlayer film for laminated glass of Examples 1 and 3 and Comparative Example 2, and Fig. 15(b) is a diagram for illustrating the gap filler polymer sheet in the interlayer film for laminated glass of Example 2.

[Fig. 16] Fig. 16(a) is a plan view of an interlayer film for laminated glass of a sixth embodiment of the present invention, Fig. 16(b) is a cross-sectional view taken along line A-A of Fig. 16(a), and Fig. 16(c) is an exploded view of the interlayer film for laminated glass of the sixth embodiment of the present invention.

[Fig. 17] Fig. 17(a) is a plan view of the interlayer film for laminated glass of a seventh embodiment of the present invention, Fig. 17(b) is a cross-sectional view taken along line A-A of Fig. 17(a), and Fig. 17(c) is an exploded view of the interlayer film for laminated glass of the seventh embodiment of the present invention.

## Description of Embodiments

### [Interlayer film for laminated glass of the first embodiment]

The interlayer film for laminated glass of the first embodiment of the present invention will be described with

reference to Fig. 1.

The interlayer film for laminated glass 1 according to the first embodiment of the present invention comprises a functional film 10 and one or more first polymer sheets 20a, 20b provided on one surface of the functional film 10. In a projected view in the thickness direction, the functional film 10 is included in at least a region of the first polymer sheet 20a that is in contact with the functional film 10, among the one or more first polymer sheets 20a, 20b. In the present embodiment, the interlayer film for laminated glass 1 further comprises one or more gap filler polymer sheets 30 provided on a surface on the side opposite to the functional film side of the first polymer sheets 20a, 20b.

Here, the expression "functional film 10 is included in the region of the first polymer sheet 20a" means that, in a projected view in the thickness direction, the entire functional film 10 is included within the region of the first polymer sheet 20a. In a projected view in the thickness direction, at least a part of the outer circumference of the functional film 10 may be present inside the outer circumference of the first polymer sheet 20a, but it is preferable that the entire outer circumference of the functional film 10 is present inside the outer circumference of the first polymer sheet 20a.

With the above configuration, the step-conforming ability of the first polymer sheets 20a, 20b can reduce the gap that occurs at the edge 12 of the functional film 10. Moreover, the difference in thickness between a region where the functional film 10 is present and a region where the functional film 10 is not present, which occurs due to the provision of the functional film 10, can be filled by a gap filler polymer sheet 30, and thus the occurrence of steps in the thickness direction in the interlayer film for laminated glass can be suppressed.

In the interlayer film for laminated glass 1 shown in Fig. 1, the number of the first polymer sheets 20a, 20b provided on one surface 11 of the functional film 10 is two, but may be one or three or more. The plurality of first polymer sheets 20a, 20b are preferably laminated in the thickness direction as shown in Fig. 1. In the interlayer film for laminated glass 1, the first polymer sheets 20a, 20b and the gap filler polymer sheet 30 are preferably bonded to each other while the functional film 10 is also bonded to the first polymer sheet 20a. Bonding of these polymer sheets and functional films is preferably performed by thermocompression bonding, as described below.

In the interlayer film for laminated glass 1 of the first embodiment of the present invention, the surface roughness ($R_{zjis94}$) of a surface 2 on the gap filler polymer sheet side is preferably 1 μm or more and 100 μm or less. In the interlayer film for laminated glass 1 of the first embodiment of the present invention, the surface 2 on the gap filler polymer sheet side is a surface that constitutes one surface of the interlayer film for laminated glass 1 and is in contact with a glass plate when it is bonded to the glass plate. In the interlayer film for laminated glass 1 of the first embodiment of the present invention, when the surface roughness ($R_{zjis94}$) of the surface 2 on the gap filler polymer sheet side is 1 μm or more and 100 μm or less, it is possible to suppress air from remaining when the interlayer film for laminated glass 1 is compression-bonded to a glass plate. From this viewpoint, the surface roughness ($R_{zjis94}$) of the surface 2 on the gap filler polymer sheet side of the interlayer film for laminated glass 1 is more preferably 3 μm or more and 80 μm or less, even more preferably 5 μm or more and 70 μm or less, and even more preferably 25 μm or more and 50 μm or less.

The surface roughness ($R_{zjis94}$) is the ten-point average roughness measured in accordance with JIS B 601-1994. As a measuring device for measuring the surface roughness ($R_{zjis94}$), for example, a "Surfcorder SE500A" manufactured by Kosaka Laboratory Ltd., can be used. More specifically, the surface roughness ($R_{zjis94}$) can be measured using a contact needle with a tip radius of 2 μm and a tip angle of 90° under the measurement conditions of a cutoff value of 2.5 mm, a reference length of 2.5 mm, a measurement length of 12.5 mm, a reserve length of 2.5 mm, and a contact needle feed speed of 0.5 mm/sec at the time of measurement, under an environment of 23°C and 30% RH. When the surface of the interlayer film for laminated glass 1 has embossment with engraved lines, the ten-point average roughness (Rz) is measured by forwarding the contact needle in a direction perpendicular to the line direction of the engraved lines. The surface roughness ($R_{zjis94}$) may be determined by measuring at 10 equally spaced points from one end to the other end and calculating the average value. In this case, the surface roughness ($R_{zjis94}$) of the surface 2 on the gap filler polymer sheet side of the interlayer film for laminated glass 1 may be measured over both the first polymer sheet 20b and the gap filler polymer sheet 30.

For example, by forming an uneven shape on the surface 2 on the gap filler polymer sheet side of the interlayer film for laminated glass 1, a surface roughness ($R_{zjis94}$) of 1 μm or more and 100 μm or less can be achieved on the surface 2 on the gap filler polymer sheet side of the interlayer film for laminated glass 1. The method for forming the uneven shape is not particularly limited, and examples thereof include a lip embossing method, an embossing roll method, and a calendar roll method. Note that the surface 2 on the gap filler polymer sheet side of the interlayer film for laminated glass 1 may have a regular shape or a random shape.

In a projected view in the thickness direction, the outer circumference of the gap filler polymer sheet 30 may be present outside, inside, or at the same position as the outer circumference of each of the first polymer sheets 20a and 20b. That is, in a projected view in the thickness direction, the outer circumference of the gap filler polymer sheet 30 may be placed at the same position as the outer circumference of each of the first polymer sheets 20a and 20b, or may be placed outside or inside. However, it is preferable that the outer circumference of an opening 31 of the gap filler polymer sheet 30 is placed at the same position or approximate the same position as the outer circumference of the functional film 10.

In a projected view in the thickness direction, the size of the outer circumference of the gap filler polymer sheet 30

may be larger than, smaller than, or the same as the outer circumference of each of the first polymer sheets 20a, 20b. Note that "larger than the outer circumference" means that the outer circumference of the gap filler polymer sheet 30 is located entirely outside the outer circumference of each of the first polymer sheets 20a, 20b in a projected view; "smaller" means that the outer circumference of the gap filler polymer sheet 30 is located entirely inside the outer circumference of each of the first polymer sheets 20a, 20b in a projected view; and "the same" means that the outer circumference of the gap filler polymer sheet 30 coincides with the outer circumference of each of the first polymer sheets 20a, 20b in a projected view.

In a projected view in the thickness direction, the distance between the outer circumference of each of the first polymer sheets 20a, 20b and the outer circumference of the gap filler polymer sheet 30 (W2) is preferably 0 mm or more and 10 mm or less over the entire circumference. When the distance between the outer circumference of each of the first polymer sheets 20a, 20b and the outer circumference of the gap filler polymer sheet 30 (W2) is 0 mm or more and 10 mm or less in a projected view in the thickness direction, the thickness of the interlayer film for laminated glass 1 easily becomes constant when the interlayer film for laminated glass 1 is provided between two glass plates. From this viewpoint, in a projected view in the thickness direction, the distance between the outer circumference of each of the first polymer sheets 20a, 20b and the outer circumference of the gap filler polymer sheet 30 (W2) is preferably 0 mm or more and 5 mm or less, more preferably 0 mm or more and 3 mm or less, and even more preferably 0 mm or more and 1 mm or less over the entire circumference. As shown in Fig. 2, it is preferable that the size of each of the outer circumferences 22a, 22b of the first polymer sheets 20a, 20b is the same as the size of the outer circumference 32 of the gap filler polymer sheet 30A, and in particular, it is particularly preferable that, in a projected view in the thickness direction, the outer circumference 32 of the gap filler polymer sheet 30 and the outer circumferences 22a, 22b of the first polymer sheets 20a, 20b are placed at the same positions as each other.

Also, as shown in Fig. 1, in a projected view in the thickness direction, it is also preferable that the outer circumference of the gap filler polymer sheet 30 is present inside the outer circumference of the first polymer sheets 20a, 20b over the entire circumference. If the outer circumference of the gap filler polymer sheet 30 is present inside the outer circumference of the first polymer sheets 20a, 20b, a step will be formed in the thickness direction as shown in Fig. 1. However, since the step is mostly filled in advance by the gap filler polymer sheet 30 and is a step on the outermost surface of the interlayer film 1, it is mostly filled as a result of the deformation of the interlayer film 1 when the interlayer film 1 is compression-bonded to the glass. Therefore, even if there is a step, defects such as a gap created between the glass plate and the interlayer film are less likely to occur.

The gap filler polymer sheet 30 preferably has the opening 31 in a region overlapping with the functional film 10 in a projected view in the thickness direction. This makes it easier to suppress the occurrence of steps in the thickness direction caused by the functional film 10 included in the interlayer film for laminated glass 1.

In a projected view in the thickness direction, the shape of the opening 31 of the gap filler polymer sheet 30 is preferably similar to the external shape of the functional film 10. This makes it possible to further reduce the gap that occurs at the edge 12 of the functional film 10.

In a projected view in the thickness direction, the inner circumference of the opening 31 of the gap filler polymer sheet 30 and the outer circumference of the functional film 10 are preferably placed at the same position or approximate the same position. In a projected view in the thickness direction, the inner circumference of the opening 31 of the gap filler polymer sheet 30 may be larger than, smaller than, or the same as the outer circumference of the functional film 10. Specifically, in a projected view in the thickness direction, the distance between the inner circumference of the opening 31 of the gap filler polymer sheet 30 and the outer circumference of the functional film 10 (W1) is preferably 5 mm or less over the entire circumference. When the distance between the inner circumference of the opening 31 of the gap filler polymer sheet 30 and the outer circumference of the functional film 10 (W1) is 5 mm or less in a projected view in the thickness direction, the gap that occurs at the edge 12 of the functional film 10 can be further reduced. From this viewpoint, in a projected view in the thickness direction, the distance between the inner circumference of the opening 31 of the gap filler polymer sheet 30 and the outer circumference of the functional film 10 (W1) is more preferably 3 mm or less, and even more preferably 1 mm or less over the entire circumference. The lower limit of the distance (W1) is not particularly limited as long as it is 0 mm or more; but the smaller the better.

In a projected view in the thickness direction, the outer circumference of the functional film 10 is more preferably placed at the same position as the inner circumference of the opening 31 or at a position inside the inner circumference of the opening 31, and the outer circumference of the functional film 10 is even more preferably placed either at the same position as the inner circumference of the opening 31 or at a position inside the inner circumference of the opening 31 over the entire circumference.

In Fig. 1, the gap filler polymer sheet 30 is composed of one polymer sheet, but it may be composed of two or more laminated polymer sheets.

The first polymer sheets 20a, 20b and the gap filler polymer sheet 30 each comprise a resin. The resin used in the first polymer sheets 20a, 20b and the gap filler polymer sheet 30 may be a curable resin such as a thermosetting resin or a moisture curable resin, but is preferably a thermoplastic resin. By using a thermoplastic resin, the first polymer sheets 20a, 20b and the gap filler polymer sheet 30 can be easily bonded to each other by thermocompression bonding.

Examples of the thermoplastic resin to be used in the first polymer sheets 20a, 20b and the gap filler polymer sheet 30 include (meth)acrylic resins, polyvinyl acetal resins, polyvinyl alcohol resins (PVA), polyurethane resins (PU), ethylene-vinyl acetate copolymer resins (EVA), saponified ethylene-vinyl acetate copolymers (EVOH), ethylene-methacrylic acid copolymer resins, ionomer resins, isobutylene resins, styrene-isoprene copolymer resins, and styrene-butadiene copolymer resins.

Among the above, the thermoplastic resin is preferably a polyvinyl acetal resin, an ethylene-vinyl acetate copolymer resin, or a (meth)acrylic resin, more preferably a polyvinyl acetal resin or an ethylene-vinyl acetate copolymer resin, and particularly even more preferably a polyvinyl acetal resin. The use of a polyvinyl acetal resin makes it easier to achieve excellent impact resistance of the laminated glass and good adhesion to glass plates.

At least one of the first polymer sheets 20a, 20b or the gap filler polymer sheet 30 preferably comprises at least one thermoplastic resin selected from the group consisting of a polyvinyl acetal resin and an ethylene-vinyl acetate copolymer resin. This can further enhance the impact resistance of the laminated glass.

The first polymer sheets 20a, 20b and the gap filler polymer sheet 30 are preferably made of the same type of resin as each other. Through the use of the same type of resin, they can be easily thermocompression-bonded to each other. Therefore, the resins used in the first polymer sheets 20a, 20b and the gap filler polymer sheet 30 are preferably all polyvinyl acetal resins. The resins to be used in the first polymer sheets 20a, 20b and the gap filler polymer sheet 30 are also preferably all ethylene-vinyl acetate copolymer resins.

(Polyvinyl acetal resin)

The polyvinyl acetal resin used in the first polymer sheets 20a and 20b and the gap filler polymer sheet 30 will be described in detail below.

The polyvinyl acetal resin is not particularly limited as long as it is a polyvinyl acetal resin obtained by acetalizing polyvinyl alcohol with an aldehyde.

The average degree of polymerization of PVA is preferably 200 or more, more preferably 500 or more, even more preferably 1,000 or more, and even more preferably 1,500 or more. When the average degree of polymerization is equal to or more than the lower limit, the penetration resistance of the laminated glass is increased. Furthermore, the average degree of polymerization of PVA is preferably 5,000 or less, more preferably 4,000 or less, and even more preferably 3,500 or less. When the average degree of polymerization is equal to or less than the above-described upper limit, the interlayer film for laminated glass can be more easily formed.

The average degree of polymerization of polyvinyl alcohol is determined by a method in accordance with JIS K 6726 "Testing methods for polyvinyl alcohol".

The aldehyde is not particularly limited, but generally, an aldehyde having 1 to 10 carbon atoms is suitably used. The aldehyde having 1 to 10 carbon atoms is not particularly limited, and examples thereof include n-butyraldehyde, isobutyraldehyde, n-valeraldehyde, 2-ethylbutyraldehyde, n-hexyl aldehyde, n-octyl aldehyde, n-nonyl aldehyde, n-decyl aldehyde, formaldehyde, acetaldehyde, and benzaldehyde. These aldehydes may be used singly, or two or more of them may be used in combination.

The number of carbon atoms in the acetal group contained in the polyvinyl acetal resin is not particularly limited, but is preferably 1 to 10, more preferably 3 to 5, even more preferably 4 or 5, and particularly preferably 4. Specific examples of aldehydes include, among those mentioned above, preferably n-butyraldehyde, n-hexylaldehyde, and n-valeraldehyde, and more preferably n-butyraldehyde. Therefore, the polyvinyl acetal resin is preferably a polyvinyl butyral resin, and both of the polyvinyl acetal resins (1) and (2) are preferably polyvinyl butyral resins.

The polyvinyl acetal resin generally has an acetal group, a hydroxyl group, and an acetyl group in a side chain. The hydroxyl group content (amount of hydroxyl groups) of the polyvinyl acetal resin is, for example, 17 mol% or more and 38 mol% or less, and preferably 20 mol% or more and 36 mol% or less.

The degree of acetalization of the polyvinyl acetal resin is, for example, 42 mol% or more and 85 mol% or less, and preferably 55 mol% or more and 80 mol% or less.

Furthermore, the degree of acetylation (amount of acetyl groups) of the polyvinyl acetal resin is, for example, 0.01 mol% or more and 30 mol% or less, and preferably 0.1 mol% or more and 25 mol% or less.

The hydroxyl group content of the polyvinyl acetal resin is the molar fraction calculated by dividing the amount of ethylene groups to which hydroxyl groups are bonded by the total amount of ethylene groups in the main chain, and expressed in percentage. The amount of ethylene groups to which the above hydroxyl groups are bonded can be measured, for example, in accordance with JIS K 6728 "Testing methods for polyvinyl butyral."

The degree of acetalization is a molar fraction obtained by subtracting the amount of ethylene groups to which hydroxyl groups are bonded and the amount of ethylene groups to which acetyl groups are bonded from the total amount of ethylene groups in the main chain, and dividing the result by the total amount of ethylene groups in the main chain, and expressed in percentage. The degree of acetalization (degree of butyralization) may be calculated from the results of measurements performed by a method in accordance with JIS K 6728 "Testing methods for polyvinyl butyral".

The degree of acetylation is a molar fraction calculated by dividing the amount of ethylene groups to which acetyl groups are bonded by the total amount of ethylene groups in the main chain, and then expressed in percentage. The amount of ethylene groups to which acetyl groups are bonded can be measured, for example, in accordance with JIS K 6728 "Testing Methods for Polyvinyl Butyral."

Typically, the polyvinyl acetal resin is preferably an unmodified polyvinyl acetal resin, but it may be a modified polyvinyl acetal resin.

The modified polyvinyl acetal resin has a structure (modifying group) other than an acetal group, a hydroxyl group, and an acetyl group, and preferably has a modifying group in a side chain. Examples of the modifying group include those having a polyalkylene oxide structure in a side chain, and those having an alkyl group other than an acetal group and an acetyl group (e.g., about 2 to 30 carbon atoms) in a side chain.

(Ethylene-vinyl acetate copolymer resin)

The ethylene-vinyl acetate copolymer resin used in the first polymer sheets 20a, 20b and the gap filler polymer sheet 30 may be a non-crosslinked ethylene-vinyl acetate copolymer resin or a high-temperature crosslinked ethylene-vinyl acetate copolymer resin. As the ethylene-vinyl acetate copolymer resin, a modified ethylene-vinyl acetate resin such as a saponified ethylene-vinyl acetate copolymer and an ethylene-vinyl acetate hydrolysate can also be used.

The ethylene-vinyl acetate copolymer resin preferably has a vinyl acetate content of 10 mass% or more and 50 mass% or less, as measured in accordance with JIS K 6730 "Testing methods for ethylene/vinyl acetate copolymer materials." By the vinyl acetate content equal to or more than the above-described lower limit, adhesion to glass plates and the like is enhanced , and the penetration resistance of the laminated glass is also likely to be enhanced. Furthermore, by the vinyl acetate content equal to or less than the above-described upper limit, the breaking strength of the interlayer film for laminated glass is increased, and the impact resistance of the laminated glass is enhanced .

(Plasticizer)

When the resin used is a thermoplastic resin, the first polymer sheets 20a, 20b and the gap filler polymer sheet 30 may further contain a plasticizer. The plasticizer contained in the first polymer sheets 20a, 20b and the gap filler polymer sheet 30 makes the interlayer film for laminated glass 1 flexible, and as a result, the laminated glass is also flexible. Furthermore, it makes it possible to increase the adhesion to glass plates when the glass plates are inorganic glass. When a polyvinyl acetal resin is used as the thermoplastic resin, a plasticizer contained in the resin layer containing the thermoplastic resin is particularly effective.

The plasticizers used in the first polymer sheets 20a and 20b and the gap filler polymer sheet 30 will be described in detail below.

Examples of the plasticizers used in the first polymer sheets 20a, 20b and the gap filler polymer sheet 30 include organic ester plasticizers such as monobasic organic acid esters and polybasic organic acid esters, and phosphorus-based plasticizers such as organic phosphate plasticizers and organic phosphite plasticizers. Among these, organic ester plasticizers are preferred. The plasticizer is preferably a liquid plasticizer. A liquid plasticizer is a plasticizer that is liquid at room temperature (23°C) and normal pressure (1 atm).

An example of the monobasic organic acid ester is an ester of a glycol and a monobasic organic acid. An example of the glycol is a polyalkylene glycol in which each alkylene unit has 2 to 4 carbon atoms, preferably 2 or 3 carbon atoms, and the number of repeating alkylene units is 2 to 10, preferably 2 to 4. The glycol may also be a monoalkylene glycol in which the number of carbon atoms is 2 to 4, preferably 2 or 3, and the number of the repeating unit is 1.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include organic acids having 3 to 10 carbon atoms, and specific examples thereof include butyric acid, isobutyric acid, caproic acid, 2-ethylbutyric acid, 2-ethylpentanoic acid, hepthylic acid, n-octylic acid, 2-ethylhexylic acid, n-nonylic acid, and decylic acid.

A preferred monobasic organic acid ester is a compound represented by the following chemical formula (1).

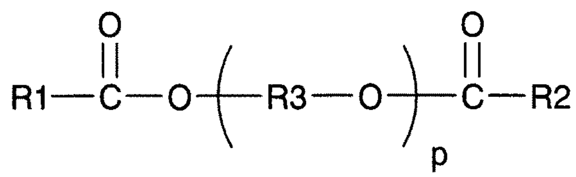

···(1)

In the above formula (1), R1 and R2 each represent an organic group having 2 to 10 carbon atoms, R3 represents

an ethylene group, an isopropylene group or an n-propylene group, and p represents an integer of 3 to 10. In chemical formula (1) above, R1 and R2 each preferably have 5 to 10 carbon atoms, more preferably 6 to 10 carbon atoms. The organic groups of R1 and R2 are preferably hydrocarbon groups, more preferably alkyl groups.

Specific examples of glycol esters include ethylene glycol di-2-ethyl butyrate, 1,2-propylene glycol di-2-ethyl butyrate, 1,3-propylene glycol di-2-ethyl butyrate, 1,4-butylene glycol di-2-ethyl butyrate, 1,2-butylene glycol di-2-ethyl butyrate, diethylene glycol di-2-ethyl butyrate, diethylene glycol dicaprylate, diethylene glycol di-2-ethylhexanoate, dipropylene glycol di-2-ethyl butyrate, triethylene glycol di-2-ethylhexanoate, triethylene glycol dicaprylate, triethylene glycol di-2-ethylpentanoate, triethylene glycol di-n-heptanoate, triethylene glycol di-2-ethylbutyrate, triethylene glycol di-2-ethylpropanoate, tetraethylene glycol di-n-heptanoate, tetraethylene glycol di-2-ethylhexanoate, and tetraethylene glycol di-2-ethylbutyrate.

Examples of polybasic organic acid esters include ester compounds of a dibasic organic acid having 4 to 12 carbon atoms, such as adipic acid, sebacic acid, and azelaic acid, with an alcohol having 4 to 10 carbon atoms. The alcohol having 4 to 10 carbon atoms may be linear, may have a branched structure, or may have a cyclic structure.

Specific examples thereof include dibutyl sebacate, dioctyl azelate, dihexyl adipate, dioctyl adipate, hexylcyclohexyl adipate, diisononyl adipate, heptylnonyl adipate, di-(2-butoxyethyl)adipate, dibutylcarbitol adipate, and mixed adipate esters. Oil-modified sebacic acid alkyd may also be an example thereof. Examples of the mixed adipate ester include adipate esters prepared from two or more alcohols selected from alkyl alcohols having 4 to 9 carbon atoms and cyclic alcohols having 4 to 9 carbon atoms.

Examples of the organic phosphate plasticizers include phosphate esters such as tributoxyethyl phosphate, isodecylphenyl phosphate, and triisopropyl phosphate.

The plasticizers may be used singly or in combination of two or more of them.

The plasticizer is preferably selected from among the above-mentioned di-(2-butoxyethyl)adipate (DBEA), triethylene glycol di-2-ethylhexanoate (3GO), triethylene glycol di-2-ethylbutyrate (3GH) and triethylene glycol di-2-ethylpropanoate, more preferably selected from triethylene glycol di-2-ethylhexanoate (3GO), triethylene glycol di-2-ethylbutyrate (3GH) and triethylene glycol di-2-ethylpropanoate, and even more preferably selected from triethylene glycol di-2-ethylhexanoate and triethylene glycol di-2-ethylbutyrate, with triethylene glycol di-2-ethylhexanoate being particularly preferred.

In the first polymer sheets 20a, 20b and the gap filler polymer sheet 30, the content of the plasticizer is not particularly limited, but is, for example, 10 parts by mass or more and 100 parts by mass or less, and preferably 15 parts by mass or more and 90 parts by mass or less, per 100 parts by mass of the thermoplastic resin.

The thickness of each of the first polymer sheets 20a, 20b is not particularly limited, but is, for example, 50 μm or more and 1,500 μm or less, preferably 100 μm or more and 1,000 μm or less, and more preferably 150 μm or more and 900 μm or less.

When a plurality of the first polymer sheets 20a, 20b are present, the total thickness of the first polymer sheets 20a, 20b is not particularly limited, but is, for example, 100 μm or more and 3,000 μm or less, preferably 200 μm or more and 2,000 μm or less, and more preferably 300 μm or more and 1,800 μm or less.

The thickness of the gap filler polymer sheet 30 is preferably approximately the same as the thickness of the functional film 10. From this viewpoint, the ratio of the thickness of the gap filler polymer sheet 30 to the thickness of the functional film 10 (thickness of the gap filler polymer sheet/thickness of the functional film) is preferably 0.5 or more and 1.5 or less, and more preferably 0.8 or more and 1.2 or less.

At least one of the first polymer sheet 20a or 20b may contain a coloring agent. Examples of the coloring agent include pigments and dyes. Examples of the pigment include, but are not limited to, metal oxide pigments such as titanium oxide and iron oxide, inorganic pigments such as carbon black, clay, kaolin, barium sulfate, barium carbonate, calcium carbonate, talc, silica, and alumina white, and organic pigments such as azo pigments, quinacridone pigments, diketopyrrolopyrrole pigments, perylene pigments, perinone pigments, benzimidazolone pigments, vat pigments, isoindoline pigments, isoindolinone pigments, metal chelate azo pigments, phthalocyanine pigments, indanthrone pigments, dioxane pigments, and indigo pigments. As the dye, known dyes can be used, and examples of the dye include azo dyes, anthraquinone dyes, indigoid dyes, and stilbene dyes.

At least one of the first polymer sheet 20a or 20b may contain a heat-shielding agent. Since the heat-shielding agent also blocks a certain amount of visible light, the first polymer sheets 20a and 20b can also be colored by containing the heat-shielding agent.

The heat-shielding agent is typically a material capable of absorbing infrared rays having a wavelength of 780 nm or more, i.e., heat rays. The heat-shielding agent is made of an inorganic material, and typically, heat shielding particles are used. Specific examples of the heat-shielding agent include metal oxide particles and particles other than metal oxide particles, such as lanthanum hexaboride ($LaB_6$) particles. Examples of metal oxide particles include tin oxide particles such as aluminum-doped tin oxide particles, indium-doped tin oxide particles, and antimony-doped tin oxide particles (ATO particles), zinc oxide particles such as gallium-doped zinc oxide particles (GZO particles), indium-doped zinc oxide particles (IZO particles), aluminum-doped zinc oxide particles (AZO particles), tin-doped zinc oxide particles, and silicon-doped zinc oxide particles, titanium oxide particles such as niobium-doped titanium oxide particles, indium oxide particles such as tin-doped indium oxide particles (ITO particles), and tungsten oxide particles such as sodium-doped tungsten oxide particles, cesium-doped tungsten oxide particles (CWO particles), thallium-doped tungsten oxide particles, and rubidium-doped tungsten oxide particles. In addition, heat-shielding particles other than these may be used. The heat-shielding agents may be used singly or in combination of two or more of them.

When a plurality of the first polymer sheets are provided (for example, when the first polymer sheets 20a and 20b are provided), they may have different compositions to exhibit different functions from each other. For example, the first polymer sheet 20a may contain a heat-shielding agent and the first polymer sheet 20b may contain a coloring agent. Alternatively, for example, the first polymer sheet 20a may contain at least one of a heat-shielding agent or a coloring agent, and the first polymer sheet 20b may contain neither a heat-shielding agent nor a coloring agent.

The functional film may be a light-controlling film, a display element film, or an optical film. Examples of optical films include films that have a function of absorbing specific light, or a function of reflecting specific light, and specific examples thereof include polarizing films, phase difference films, and anti-reflection films.

Examples of functional films include P-polarized reflective films, holographic films, heat ray reflective films, light-controlling films, films for display device, transparent conductive films, touch sensor films, circuit films, solar light films, and electrically controllable films. Of the above, preferred functional films are heat ray reflective films and light-controlling films.

The functional film is not particularly limited in terms of material, but may comprise at least a general-purpose resin such as a polyester resin such as polyethylene terephthalate resin (PET) and polyethylene naphthalate resin (PEN), a (meth)acrylic resin, TAC, a PES resin, or a polyimide resin, and among these, a polyethylene terephthalate resin is preferred. The outermost surface of the functional film preferably includes a thermoplastic resin. For example, when the outermost surface of the functional film 10 that is in contact with the first polymer sheet 20a includes a thermoplastic resin, the functional film 10 is easily bonded to the first polymer sheet 20a by thermocompression bonding. Similarly, as described below, when the outermost surface of the functional film 10 that is in contact with the second polymer sheet 40 includes a thermoplastic resin, the functional film 10 is easily bonded to the second polymer sheet 40 by thermocompression bonding.

The functional film 10 preferably includes a PET film, and it is also preferable that the PET film is placed at a position that is in contact with the first polymer sheet 20a.

The heat reflective film is a film-like member having an infrared reflective layer. Specifically, the heat reflective film is preferably a heat reflective film comprising two resin films and an infrared reflective layer placed between the two resin films. Examples of the infrared reflective layer include a resin film with a metal foil, a multilayer laminate film in which a metal layer and a dielectric layer are formed on a resin layer, a multilayer resin film, and a liquid crystal film. Examples of resin films to be used in the infrared reflective film include, but are not particularly limited to, films containing a polyethylene terephthalate resin (e.g., PET film), polyester resin films such as a PEN film, a (meth)acrylic resin film, a TAC film, a PES resin film, and a polyimide resin film. Among these, the polyester resin film is preferred in view of handling, etc., and particularly the PET film is more preferred. The heat reflective film may also be composed of only the infrared reflective layer, with the resin film omitted.

The light-controlling film is a film-like member having a light-controlling element. Specifically, the light-controlling element is preferably a light-controlling film comprising two resin films and a light-controlling layer placed between the two resin films. Examples of the resin film to be used in the light-controlling element include, but are not particularly limited to, films containing polyethylene terephthalate resins (e.g., a PET film), polyester resin films such as a PEN film, a (meth) acrylic resin film, a TAC film, a PES resin film, and a polyimide resin film. Among these, the polyester resin film is preferred in view of handling, etc., and particularly the PET film is more preferred. In addition, a conductive layer that constitutes an electrode is provided on a surface on the light-controlling layer side of each of the two resin films.

The light-controlling layer changes the visible light transmittance through switching between application and non-application of a voltage to between the conductive layers of the two resin films. The light-controlling layer is composed of a liquid crystal layer such as a polymer-dispersed liquid crystal (PDLC), and the light-controlling film may be a PDLC film. The light-controlling film may also be an SPD (Suspended Particle Device) film, an electrochromic film, an electrophoretic film device, a GHLC (Guest-Host Liquid Crystal) film, a PNLC (Polymer Network Liquid Crystal) film, or the like. Thus, the light-controlling layer may be an SPD layer comprising a resin matrix and a light-adjusting suspension dispersed in the resin matrix, or may be an electrochromic material layer. It may also be an electrophoretic layer comprising electrophoretic particles and a dispersant for dispersing the electrophoretic particles.

The thickness of the functional film is not particularly limited, but is, for example, 30 μm or more and 1,200 μm or less, preferably 50 μm or more and 1,000 μm or less, more preferably 75 μm or more and 750 μm or less, and even more preferably 100 μm or more and 500 μm or less.

The surface 2 on the gap filler polymer sheet side of the interlayer film for laminated glass 1 of the first embodiment of the present invention may be protected with a protective release film. A resin film may be used as the protective release film, and the resin film is preferably a resin film having a release-treated surface that has been subjected to a release treatment with a silicone release agent or the like.

[Interlayer film for laminated glass of the second embodiment]

An interlayer film for laminated glass of the second embodiment of the present invention will be described with reference to Fig. 3. The following mainly describes the differences from the interlayer film for laminated glass of the first embodiment of the present invention, and description of the same points as of the interlayer film for laminated glass of the first embodiment will be omitted.

The interlayer film for laminated glass 1B of the second embodiment of the present invention differs from the interlayer film for laminated glass of the first embodiment in that the interlayer film 1B further comprises a second polymer sheet 40.

That is, the interlayer film for laminated glass 1B of the second embodiment of the present invention further comprises a second polymer sheet 40 provided on the other surface of the functional film 10, in addition to the functional film 10, the polymer sheets 20a and 20b, and the gap filler polymer sheet 30. In the present embodiment, the providing the second polymer sheet 40 allows both surfaces 2 and 3 of the interlayer film for glass, 1B to be easily bonded to glass plates without the need of providing an additional resin layer or the like.

In the interlayer film for laminated glass, 1B of the second embodiment of the present invention, the number of the second polymer sheet 40 is one, but may be two or more. The two or more second polymer sheets 40 are preferably laminated in the thickness direction.

In a projected view in the thickness direction, the functional film 10 is preferably included in at least the region of the second polymer sheet 40 that is in contact with the functional film 10, among the one or more second polymer sheets. It means in other words that in a projected view in the thickness direction, the entire functional film 10 is included within the region of the second polymer sheet 40. Also, in a projected view in the thickness direction, at least a part of the outer circumference of the functional film 10 should be present inside the outer circumference of the second polymer sheet 40, but it is preferable that the entire outer circumference of the functional film 10 is present inside the outer circumference of the second polymer sheet 40.

The surface roughness ($R_{zjis94}$) of the surface 3 on the second polymer sheet side of the interlayer film for laminated glass 1B of the second embodiment of the present invention is preferably 1 μm or more and 100 μm or less. The surface 3 on the second polymer sheet side of the interlayer film for laminated glass 1B of the second embodiment of the present invention is the surface that constitutes the other surface of the interlayer film for laminated glass 1, and is in contact with a glass plate when it is bonded to the glass plate. When the surface roughness ($R_{zjis94}$) of the surface 3 on the second polymer sheet side of the interlayer film for laminated glass 1B of the second embodiment of the present invention is 1 μm or more and 100 μm or less, the generation of residual air can be further suppressed when the interlayer film for laminated glass 1B of the second embodiment of the present invention is compression-bonded to a glass plate. From this viewpoint, the surface roughness ($R_{zjis94}$) of the surface 3 on the second polymer sheet side of the interlayer film for laminated glass 1B of the second embodiment of the present invention is more preferably 3 μm or more and 80 μm or less, even more preferably 5 μm or more and 70 μm or less, and still more preferably 25 μm or more and 50 μm or less.

As with the interlayer film for laminated glass 1 of the first embodiment of the present invention, for example, by forming an uneven shape on the surface 3 on the second polymer sheet side of the interlayer film for laminated glass 1B of the second embodiment of the present invention, a surface roughness ($R_{zjis94}$) of 1 μm or more and 100 μm or less can be achieved on the surface 3 on the second polymer sheet side of the interlayer film for laminated glass 1B of the second embodiment of the present invention. Examples of the method for forming the uneven shape include, but are not particularly limited to, a lip embossing method, an embossing roll method, and a calendar roll method. Note that the unevenness of the surface 3 on the second polymer sheet side of the interlayer film for laminated glass 1B of the second embodiment of the present invention may have a regular shape or a random shape.

In a projected view in the thickness direction, the size of the outer circumference of the gap filler polymer sheet 30 may be larger than, smaller than, or the same as the outer circumference of the second polymer sheet 40. "Larger than the outer circumference" means that in a projected view, the outer circumference of the gap filler polymer sheet 30 is present entirely outside the outer circumference of the second polymer sheet 40; "smaller" means that in a projected view, the outer circumference of the gap filler polymer sheet 30 is present entirely inside the outer circumference of the second polymer sheet 40; and "the same" means that in a projected view, the outer circumference of the gap filler polymer sheet 30 coincides with the outer circumference of the second polymer sheet 40.

In a projected view in the thickness direction, the distance between the outer circumference of the second polymer sheet 40 and the outer circumference of the gap filler polymer sheet 30 (W2) is preferably 0 mm or more and 10 mm or less over the entire circumference. If the distance between the outer circumference of the second polymer sheet 40 and the outer circumference of the gap filler polymer sheet 30 (W2) is 0 mm or more and 10 mm or less in a projected view in the thickness direction, the thickness of the interlayer film for laminated glass, 1A easily becomes constant when the interlayer film for laminated glass, 1A is provided between two glass plates. From this viewpoint, in a projected view in the thickness direction, the distance (W2) between the outer circumference of the second polymer sheet 40 and the outer circumference of the gap filler polymer sheet 30 is more preferably 0 mm or more and 5 mm or less, even more preferably 0 mm or more

and 3 mm or less, and even more preferably 0 mm or more and 1 mm or less over the entire circumference.

In a projected view in the thickness direction, the size of the outer circumference of the second polymer sheet 40 may be larger than, smaller than, or the same as the outer circumference of the first polymer sheet 20a, 20b. Note that "larger than the outer circumference" means that the outer circumference of the second polymer sheet 40 is present entirely outside the outer circumference of each of the first polymer sheets 20a, 20b in a projected view; "smaller" means that the outer circumference of the second polymer sheet 40 is present entirely inside the outer circumference of each of the first polymer sheets 20a, 20b in a projected view; and "the same" means that the outer circumference of the second polymer sheet 40 coincides with the outer circumference of each of the first polymer sheets 20a, 20b in a projected view.

In a projected view in the thickness direction, the distance between the outer circumference of the first polymer sheet 20a, 20b and the outer circumference of the second polymer sheet 40 is preferably 0 mm or more and 10 mm or less over the entire circumference. If the distance between the outer circumference of the first polymer sheet 20a, 20b and the outer circumference of the second polymer sheet 40 is 0 mm or more and 10 mm or less in a projected view in the thickness direction, the thickness of the interlayer film for laminated glass, 1B easily becomes constant when the interlayer film for laminated glass, 1B is provided between two glass plates. From this viewpoint, in a projected view in the thickness direction, the distance between the outer circumference of the first polymer sheet 20a, 20b and the outer circumference of the second polymer sheet 40 is more preferably 0 mm or more and 5 mm or less, even more preferably 0 mm or more and 3 mm or less, and even more preferably 0 mm or more and 1 mm or less over the entire circumference. As shown in Fig. 4, it is preferable that the size of each of the outer circumferences 22a, 22b of the first polymer sheets 20a, 20b, the size of the outer circumference 42 of the second polymer sheet 40, and the size of the outer circumference 32 of the gap filler polymer sheet 30C are all the same, and in particular, it is particularly preferable that, in a projected view in the thickness direction, the outer circumferences 22a, 22b of the first polymer sheets 20a, 20b, the outer circumference 42 of the second polymer sheet 40, and the outer circumference 32 of the gap filler polymer sheet 30C are all placed at the same position relative to each other.

As with the first polymer sheets 20a, 20b and the gap filler polymer sheet 30, the second polymer sheet 40 also comprises a resin. The resin to be used in the second polymer sheet 40 may be a curable resin such as a thermosetting resin or a moisture curable resin, but a thermoplastic resin is preferred. With the use of a thermoplastic resin, the first polymer sheet 20a, the second polymer sheet 40, and the gap filler polymer sheet 30 can be easily bonded to each other by thermocompression bonding.

Examples of the thermoplastic resin to be used in the second polymer sheet 40 include (meth)acrylic resins, polyvinyl acetal resins, polyvinyl alcohol resins (PVA), polyurethane resins (PU), ethylene-vinyl acetate copolymer resins (EVA), saponified ethylene-vinyl acetate copolymers (EVOH), ethylene-methacrylic acid copolymer resins, ionomer resins, isobutylene resins, styrene-isoprene copolymer resins, and styrene-butadiene copolymer resins.

Among the above, the thermoplastic resin is preferably a polyvinyl acetal resin, an ethylene-vinyl acetate copolymer resin, or a (meth)acrylic resin, more preferably a polyvinyl acetal resin or an ethylene-vinyl acetate copolymer resin, and particularly even more preferably a polyvinyl acetal resin. The use of a polyvinyl acetal resin makes it easier to achieve excellent impact resistance of the laminated glass and good adhesion to glass plates.

The second polymer sheet 40 preferably comprises at least one thermoplastic resin selected from the group consisting of polyvinyl acetal resins and ethylene-vinyl acetate copolymer resins. This can further improve the impact resistance of the laminated glass.

The first polymer sheets 20a, 20b, the second polymer sheet 40, and the gap filler polymer sheet 30 are preferably made of the same type of resin as each other. The use of the same type of resin makes it easier to bond them together by thermocompression bonding. Therefore, it is preferable that the resins to be used in the first polymer sheets 20a, 20b, the second polymer sheet 40, and the gap filler polymer sheet 30 are all polyvinyl acetal resins, and it is also preferable that they are all ethylene-vinyl acetate copolymer resins.

The thickness of the second polymer sheet 40 is not particularly limited, but is, for example, 50 $\mu$m or more and 1,500 $\mu$m or less, preferably 100 $\mu$m or more and 1,000 $\mu$m or less, and more preferably 150 $\mu$m or more and 900 $\mu$m or less.

When a plurality of the second polymer sheets are present, the total thickness of the second polymer sheets is not particularly limited, but is, for example, 150 $\mu$m or more and 3,000 $\mu$m or less, preferably 200 $\mu$m or more and 2,000 $\mu$m or less, and more preferably 300 $\mu$m or more and 1,800 $\mu$m or less.

The surface 3 on the second polymer sheet side of the interlayer film for laminated glass 1B of the second embodiment of the present invention may be protected with a protective release film. A resin film may be used as the protective release film, and the resin film is preferably a resin film having a release-treated surface that has been subjected to a release treatment with a silicone release agent or the like.

[Interlayer film for laminated glass of the third embodiment]

As shown in Fig. 5, in the interlayer film for glass 1D of the third embodiment of the present invention, the gap filler

polymer sheet 30D comprising the opening 31 is composed of a plurality of polymer sheets 30a to 30d arranged in the planar direction. The other points are the same as those of the interlayer film for laminated glass of the first embodiment of the present invention. This makes it possible to reduce waste of the polymer sheet when cutting out the polymer sheet to produce the gap filler polymer sheet 30D. Note that the gap filler polymer sheet 30D is composed of four polymer sheets, but it may be composed of two polymer sheets, three polymer sheets, or five or more polymer sheets. Also, as shown in Fig. 6, even when the gap filler polymer sheet 30E is composed of a plurality of polymer sheets arranged in the planar direction, the positional relationship between the outer circumferences 22a, 22b of the first polymer sheets 20a, 20b and the outer circumference of the gap filler polymer sheet 30E is the same as described in the first embodiment. The positional relationship between the inner circumference of the gap filler polymer sheet 30E and the outer circumference of the functional film is also the same.

[Interlayer film for laminated glass of the fourth embodiment]

As shown in Fig. 7, in the interlayer film for glass 1F of the fourth embodiment of the present invention, the gap filler polymer sheet 30F comprising the opening 31 is composed of a plurality of the polymer sheets 30a to 30d arranged in the planar direction. The other points are the same as those of the interlayer film for laminated glass of the second embodiment of the present invention. This makes it possible to reduce waste of the polymer sheet when cutting out the polymer sheet to produce the gap filler polymer sheet 30F. Note that the gap filler polymer sheet 30F is composed of four polymer sheets, but it may be composed of two polymer sheets, three polymer sheets, or five or more polymer sheets.
Also, as shown in Fig. 8, even when the gap filler polymer sheet 30G is composed of a plurality of polymer sheets arranged in the planar direction, it is particularly preferable that the position of each of the outer circumferences 22a, 22b of the first polymer sheets 20a, 20b, the position of the outer circumference of the second polymer sheet 40, and the position of the outer circumference 32 of the gap filler polymer sheet 30G are the same in a projected view in the thickness direction.

[Interlayer film for laminated glass of the fifth embodiment]

As shown in Fig. 9, the interlayer film for laminated glass 1H of the fifth embodiment of the present invention further comprises a third polymer sheet 50 provided on a surface 33 on the side opposite to the first polymer sheet side of the gap filler polymer sheet 30. This makes it easier to suppress the occurrence of steps in the thickness direction in the interlayer film for laminated glass due to the step-following ability of the third polymer sheet 50.

In a projected view in the thickness direction, the position of the outer circumference of the third polymer sheet 50 may be outside, inside, or the same as the position of the outer circumference of the gap filler polymer sheet 30.

In a projected view in the thickness direction, the distance between the outer circumference of the third polymer sheet 50 and the outer circumference of the gap filler polymer sheet 30 is preferably 0 mm or more and 5 mm or less over the entire circumference. When the distance between the outer circumference of the third polymer sheet 50 and the outer circumference of the gap filler polymer sheet 30 is 0 mm or more and 5 mm or less in a projected view in the thickness direction, the thickness of the interlayer film for laminated glass, 1J easily becomes constant when the interlayer film for laminated glass, 1J is provided between two glass plates. From this viewpoint, in a projected view in the thickness direction, the distance between the outer circumference of the third polymer sheet 50 and the outer circumference of the gap filler polymer sheet 30 is more preferably 0 mm or more and 3 mm or less, and even more preferably 0 mm or more and 1 mm or less over the entire circumference.

The positions of the outer circumferences of the first polymer sheets 20a, 20b may be outside, inside, or the same as the position of the outer circumference of the third polymer sheet 50.

In a projected view in the thickness direction, the distance between the outer circumferences of the first polymer sheets 20a, 20b and the outer circumference of the third polymer sheet 50 is preferably 0 mm or more and 5 mm or less over the entire circumference. When the distance between the outer circumference of the first polymer sheet 20a and the outer circumference of the third polymer sheet 50 is 0 mm or more and 5 mm or less in a projected view in the thickness direction, the thickness of the interlayer film for laminated glass, 1H easily becomes constant when the interlayer film for laminated glass, 1H is provided between two glass plates. From this viewpoint, in a projected view in the thickness direction, the distance between the outer circumferences of the first polymer sheets 20a, 20b and the outer circumference of the third polymer sheet 50 is more preferably 0 mm or more and 3 mm or less, and even more preferably 0 mm or more and 1 mm or less over the entire circumference.

As shown in Fig. 10, it is particularly preferable that the positions of the outer circumferences 22a, 22b of the first polymer sheets 20a, 20b, the position of the outer circumference 52 of the third polymer sheet 50, and the position of the outer circumference 32 of the gap filler polymer sheet 30I are the same in a projected view in the thickness direction.

As with the first polymer sheets 20a, 20b and the gap filler polymer sheet 30, the third polymer sheet 50 also comprises a resin. The resin to be used in the second polymer sheet 40 may be a curable resin such as a thermosetting resin or a moisture curable resin, but is preferably a thermoplastic resin. With the use of a thermoplastic resin, the first

polymer sheet 20b, the gap filler polymer sheet 30, and the third polymer sheet 50 can be easily bonded to each other by thermocompression bonding.

Examples of the thermoplastic resin to be used in the third polymer sheet 50 include (meth)acrylic resins, polyvinyl acetal resins, polyvinyl alcohol resins (PVA), polyurethane resins (PU), ethylene-vinyl acetate copolymer resins (EVA), saponified ethylene-vinyl acetate copolymers (EVOH), ethylene-methacrylic acid copolymer resins, ionomer resins, isobutylene resins, styrene-isoprene copolymer resins, and styrene-butadiene copolymer resins.

Among the above, the thermoplastic resin is preferably a polyvinyl acetal resin, an ethylene-vinyl acetate copolymer resin, or a (meth)acrylic resin, more preferably a polyvinyl acetal resin or an ethylene-vinyl acetate copolymer resin, and particularly even more preferably a polyvinyl acetal resin. The use of a polyvinyl acetal resin makes it easier to achieve excellent impact resistance of the laminated glass and good adhesion to glass plates.

The third polymer sheet 50 preferably comprises at least one thermoplastic resin selected from the group consisting of polyvinyl acetal resins and ethylene-vinyl acetate copolymer resins. This can further improve the impact resistance of the laminated glass.

The first polymer sheet 20b, the gap filler polymer sheet 30, and the third polymer sheet 50 are preferably made of the same type of resin as each other. With the use of the same type of resin, they can be easily bonded to each other by thermocompression bonding. Therefore, it is preferable that the resins to be used in the first polymer sheet 20b, the gap filler polymer sheet 30, and the third polymer sheet 50 are all polyvinyl acetal resins, and it is also preferable that they are all ethylene-vinyl acetate copolymer resins.

The thickness of the third polymer sheet 50 is not particularly limited, but is, for example, 50 $\mu$m or more and 1,500 $\mu$m or less, preferably 100 $\mu$m or more and 1,000 $\mu$m or less, and more preferably 150 $\mu$m or more and 900 $\mu$m or less.

When a plurality of the third polymer sheets are present, the total thickness of the third polymer sheets is not particularly limited, but is, for example, 100 $\mu$m or more and 3,000 $\mu$m or less, preferably 200 $\mu$m or more and 2,000 $\mu$m or less, and more preferably 300 $\mu$m or more and 1,800 $\mu$m or less.

The interlayer film for laminated glass of the fifth embodiment of the present invention may also further comprise a second polymer sheet 40 provided on the other surface side of the functional film 10, as with the interlayer film for laminated glass, 1B of the second embodiment of the present invention.

[Interlayer film for laminated glass of the sixth embodiment]

As shown in Fig. 16, in the interlayer film for laminated glass, 1J of the sixth embodiment of the present invention, a part of the gap filler polymer sheet 30J is notched (see reference numeral 34). This makes it easy to pass the wiring of the functional film through the gap filler polymer sheet 30J. In this case, the outer circumference of the gap filler polymer sheet 30J is the outer circumference excluding the notch portion 34 of the gap filler polymer sheet 30J. In this case, "over the entire circumference" means the entire outer circumference excluding the notch portion 34 of the gap filler polymer sheet 30J. In the interlayer film for laminated glass, 1J of the sixth embodiment of the present invention, the number of the notch portion of the gap filler polymer sheet 30J is one, but it may be two or more. The proportion of the notch portion is not particularly limited, but is, for example, 20% or less, preferably 0.1% or more and 10% or less, more preferably 0.2% or more and 5% or less based on the outer circumference of the gap filler polymer sheet. Also in the interlayer films for laminated glass of the first to fifth embodiments of the present invention, a portion of the gap filler polymer sheet may be notched.

[Interlayer film for laminated glass of the seventh embodiment]

As shown in Fig. 17, the interlayer film for laminated glass, 1K of the seventh embodiment of the present invention further comprises a functional film 10a in addition to the functional film 10. Note that although the interlayer film for laminated glass, 1K of the seventh embodiment of the present invention comprises two functional films 10, 10a, the interlayer film for laminated glass of the seventh embodiment of the present invention may comprise three or more functional films. This can increase the functions of the interlayer film for laminated glass.

Furthermore, when the interlayer film for laminated glass comprises a plurality of functional films, a polymer sheet 20a may be interposed between two functional films 10, 10a as in the interlayer film for laminated glass 1K shown in Fig. 17. This can prevent delamination from occurring between the two functional films 10, 10a.

The interlayer films for laminated glass of the first to seventh embodiments can be combined with each other.

The interlayer films for laminated glass of the first to seventh embodiments are merely examples of the interlayer film for laminated glass of the present invention, and therefore the interlayer films for laminated glass of the first to seventh embodiments do not limit the interlayer film for laminated glass of the present invention.

[Method of producing interlayer film for laminated glass]

The method for producing an interlayer film for laminated glass of the present invention comprises a step of laminating a functional film, a first polymer sheet, and a gap filler polymer sheet such that the functional film, the first polymer sheet, and the gap filler polymer sheet are arranged in this order. In this step, it is not necessary to laminate the functional film, the first polymer sheet, and the gap filler polymer sheet at once. For example, one or more polymer sheets may be laminated on one surface of the functional film, and then the gap filler polymer sheet may be laminated on the side opposite to the functional film side of the polymer sheet laminated on the functional film. The functional film and the polymer sheet to be used in the method for producing an interlayer film for laminated glass of the present invention have been described in the section on the interlayer film for laminated glass, so the description of the functional film and the polymer sheet will be omitted. As for the method for laminating one or more polymer sheets on one surface of the functional film and the method for laminating the gap filler polymer sheet on the side opposite to the functional film side of the polymer sheet laminated on the functional film, a conventionally known method can be used.

The interlayer film for laminated glass of the second embodiment of the present invention can be produced by a production method comprising a step of laminating a second polymer sheet, a functional film, a first polymer sheet, and a gap filler polymer sheet, such that the second polymer sheet, the functional film, the first polymer sheet, and the gap filler polymer sheet are arranged in this order. The interlayer film for laminated glass of the fifth embodiment of the present invention can be produced by a production method comprising a step of laminating a functional film, a first polymer sheet, a gap filler polymer sheet, and a third polymer sheet, such that the functional film, the first polymer sheet, the gap filler polymer sheet, and the third polymer sheet are arranged in this order, for example. The interlayer film for laminated glass of the seventh embodiment of the present invention can be produced by a production method comprising a step of laminating a second polymer sheet, a functional film, a first polymer sheet, a functional film, a third polymer sheet, and a gap filler polymer sheet, such that the second polymer sheet, the functional film, the first polymer sheet, the functional film, the third polymer sheet, and the gap filler polymer sheet are arranged in this order.

After laminating at least the functional film, the first polymer sheet, and the gap filler polymer sheet as described above, the functional film, the first polymer sheet, and the gap filler polymer sheet can be integrated by, for example, thermocompression bonding using a heat press.

When the surfaces 2 and 3 are uneven, an uneven shape may be formed on the surface of polymer sheets such as the first polymer sheet, the gap filler polymer sheet, the second polymer sheet, and the third polymer sheet, and then the polymer sheets may be laminated to form an uneven shape on the surface of the interlayer film for laminated glass. Alternatively, the polymer sheets may be laminated to produce an interlayer film for laminated glass, and then an uneven shape may be formed on the surface of the interlayer film for laminated glass. As described above, the method for forming unevenness on the surface of the polymer sheets or the interlayer film for laminated glass is not particularly limited, and examples thereof include a lip embossing method, an embossing roll method, and a calendar roll method.

[Laminated glass]

The laminated glass of the present invention comprises a pair of glass plates and the interlayer film for laminated glass of the present invention provided between the pair of glass plates.

(Glass plate)

The glass plate to be used in the laminated glass of the present invention may be any of inorganic glass and organic glass, but is preferably inorganic glass. Examples of the inorganic glass include, but are not particularly limited to, clear glass, float plate glass, tempered glass, colored glass, polished plate glass, ornamental glass, wired plate glass, lined plate glass, ultraviolet absorbing plate glass, infrared reflecting plate glass, infrared absorbing plate glass, and green glass.

As the organic glass, what is generally called resin glass is used, and examples thereof include polycarbonate plates, (meth)acrylic plates such as a polymethyl methacrylate plate, acrylonitrile styrene copolymer plates, acrylonitrile butadiene styrene copolymer plates, polyester plates such as a polyethylene terephthalate plate, fluorine-based resin plates, polyvinyl chloride plates, chlorinated polyvinyl chloride plates, polypropylene plates, polystyrene plates, polysulfone plates, epoxy resin plates, phenol resin plates, and unsaturated polyester resin plates, and various organic glass plates such as a polyimide resin plate. The organic resin plate may be appropriately subjected to surface treatment and others.

The pair of glass plates to be used in the laminated glass of the present invention may be made of the same material or different types of material. For example, one may be inorganic glass and the other may be organic glass; however, both the pair of glass plates are preferably inorganic glass or organic glass.

The thickness of each glass plate of the pair of glass plates is not particularly limited, but is, for example, about 0.1

mm to 15 mm, and preferably 0.5 mm to 5 mm. The thicknesses of the pair of glass plates may be the same or different.

(Layer structure of laminated glass)

Next, the layer structure of the laminated glass will be described in detail with reference to the drawings and with reference to the embodiments. In the present invention, the laminated glass may be one in which a polymer sheet 80 is provided between a pair of glass plates in addition to the interlayer film for laminated glass of the present invention. For example, as shown in Fig. 11, in the first embodiment of the present invention, laminated glass 100 may be one in which the interlayer film for laminated glass 1 of the first embodiment of the present invention is provided between a pair of glass plates 60, 70, and a polymer sheet 80 is provided on a surface opposite to the surface on the side where the first polymer sheets 20a, 20b of the functional film 10 of the interlayer film 1 are provided. In the laminated glass 100 shown in Fig. 11, one polymer sheet 80 is provided, but two or more polymer sheets 80 may be provided.

Of course, in the present invention, the laminated glass may be one in which only the interlayer film for laminated glass of the present invention is provided between a pair of glass plates. For example, as shown in Fig. 12, in the second embodiment of the present invention, laminated glass 100A may be one in which the interlayer film for laminated glass 1B of the second embodiment of the present invention is provided between a pair of glass plates 60, 70, and the pair of glass plates 60, 70 are bonded together via only the interlayer film 1B.

(Method for producing laminated glass)

The laminated glass of the present invention may be produced by a production method including placing an interlayer film for laminated glass between a pair of glass plates, and then bonding them together by compression bonding to obtain laminated glass.

In the above production method, first, two glass plates and the interlayer film for laminated glass of the present invention are provided. Then, the interlayer film for laminated glass is placed between the pair of glass plates, and these are bonded together to form laminated glass.

Alternatively, the laminated glass of the present invention may be produced in the following manner: members for constituting the interlayer film for laminated glass of the present invention are provided; the members for constituting the interlayer film for laminated glass of the present invention are placed between a pair of glass plates; and these are compression-bonded together to laminate.

The above lamination may be performed using a vacuum bag, using an autoclave under low temperature conditions, using a vacuum laminator, or using a press machine other than the above, but among these, it is preferable to perform lamination in a vacuum bag. Also, before performing the lamination, temporary compression bonding may be performed using a rubber roll or the like.

In this production method, it is preferable that the lamination is performed under low temperature conditions, and specifically, compression bonding is preferably performed at a temperature of 110°C or lower. The lamination is also preferably performed at low temperature and low pressure, and specifically, compression bonding is preferably performed at a temperature of 110°C or lower and a pressure of 1.0 MPa or less. In this way, through lamination under low temperature and low pressure conditions, it is possible to prevent deterioration or inactivation of the function of the functional film.

The temperature during lamination is preferably 100°C or lower in view of more reliably preventing deterioration or inactivation of the function of the functional film, and is preferably 60°C or higher, more preferably 70°C or higher, in view of preventing the generation of residual air or foaming.

The pressure during lamination is preferably 1.2 MPa or less in view of more reliably preventing deterioration or inactivation of the function of the functional film. In a case where lamination is performed under negative pressure, as in a case of using a vacuum bag, the pressure may be, for example, 0.095 MPa or less, preferably 0.08 MPa or less, and preferably 0.06 MPa or less.

The lower limit of the pressure during lamination is not particularly limited; however, when lamination is performed under pressure such as in an autoclave, the pressure is preferably 0.5 MPa or more, more preferably 0.7 MPa or more. In a case where lamination is performed under negative pressure, as in a case of using a vacuum bag, the pressure is preferably 0.001 MPa or more, more preferably 0.005 MPa or more.

The time for lamination under the above temperature and pressure is not particularly limited, but is, for example, 5 to 120 minutes, and preferably 10 to 60 minutes.

The laminated glass of the present invention can be used in various applications without particular limitation. For example, the laminated glass of the present invention is used for window glass for vehicles such as automobiles and trains, various vehicles such as ships and airplanes, or various buildings such as buildings, condominiums, detached houses, halls, and gymnasiums, or machine tools for cutting and polishing, and working machines such as shovels and cranes, and for partitions inside various vehicles and various buildings. Among them, the laminated glass is preferably used for vehicles such as automobiles, and is preferably used for window glass for vehicles.

The laminated glass of the present invention may be used for various display applications, for example, when a display device includes the laminated glass member. As for display applications, the above-mentioned window glass or partition may be used as a display.

The laminated glass may also be used as a cover glass or the like for various displays, and may be applied to, for example, an in-vehicle display.

## Examples

The present invention will be described in more detail below by way of examples, but the present invention is not limited to these examples.

The methods for measuring various physical properties are as follows.

### <Evaluation of interlayer film for laminated glass>

#### 1. Surface Roughness

The surface roughness ($R_{zjis94}$) of a surface of the interlayer film for laminated glass on the gap filler polymer sheet side and the surface roughness ($R_{zjis94}$) of a surface of the interlayer film for laminated glass on the second polymer sheet side were measured by the method described in the above description.

#### 2. Thickness

The thickness of the obtained interlayer film for laminated glass was measured with a thickness gauge and evaluated according to the following criteria.

A:

$$1 \leq T1/T2 \leq 1.05 \text{ or } 1 \leq T2/T1 \leq 1.05$$

B:

$$1.05 < T1/T2 \leq 1.1 \text{ or } 1.05 < T2/T1 \leq 1.1$$

C:

$$T1/T2 > 1.1 \text{ or } T2/T1 > 1.1$$

T1: Thickness at the center of the functional film of the interlayer film for laminated glass (see Fig. 13)
T2: Thickness at the center of the interlayer film for laminated glass where no functional film is present (see Fig. 13)

#### 3. Gap

A cross section of the obtained interlayer film for laminated glass was recognized under a microscope and evaluated according to the following criteria.

A: There is a gap of 0 mm to 3 mm at the edge of the functional film.
B: There is a gap of 3 mm to 5 mm at the edge of the functional film.
C: There is a gap of more than 5 mm at the edge of the functional film.

### <Evaluation of laminated glass>

#### 1. Cracking

The obtained laminated glass was visually recognized and evaluated according to the following criteria.

A: None of the five glass plates are cracked.
B: One of the five glass plates is cracked.

C: Two or more of the five glass plates are cracked.

2. Foaming

The obtained laminated glass was heated in an oven at 140°C for 2 hours.
Next, after removing from the oven and allowing to cool for 3 hours, the appearance of the laminated glass was visually recognized and evaluated according to the following criteria as to whether foam (cell) was generated in the part of the laminated glass where the functional film was present and around the edge of the functional film.

A: No foam (cell) is present in all the five glass plates, or foaming (cell) is present in one plate.
B: Foam (cell) is present in two or three of the five glass plates.
C: Foam (cell) is present in four or more of the five glass plates.

[Example 1]

(Preparation of interlayer film for laminated glass)

A PDLC film (200 mm long × 200 mm wide × 385 μm thick) (A1) was provided as the functional film 10.
A PVB sheet (305 mm long × 305 mm wide × 380 μm thick) (B1) was provided as the first polymer sheet 20a.
A PVB sheet (305 mm long × 305 mm wide × 380 mm thick) (B2) was provided as the second polymer sheet 40.
A PVB sheet (305 mm long × 305 mm wide × 380 μm thick) (C1) was provided as the gap filler polymer sheet 30, and an opening (201 mm long × 201 mm wide) was provided in the center (see Fig. 15(a)).
These were laminated in the order illustrated in Fig. 14(a) with their vertical and horizontal centers aligned to obtain a laminated body.
Release sheets were placed on both sides of the obtained laminated body, and the laminated body was heated and decompressed by vacuum forming under conditions of a temperature of 90°C and a gauge pressure of -900 mbar to integrate the three PVB sheets by thermocompression bonding, thereby obtaining an interlayer film for laminated glass of Example 1 with the PDLC film embedded therein. An EPDM rubber sheet was used as the release sheet used in thermocompression bonding. The surface of the interlayer film for laminated glass was embossed so that the surface roughness ($R_{zjis94}$) of the interlayer film for laminated glass was 40 μm.

(Preparation of laminated glass)

The obtained interlayer film was sandwiched between two transparent glass plates (300 mm long × 300 mm wide × 2 mm thick) and integrated using an autoclave under conditions of 140°C, 10 MPa (gauge pressure) and 30 minutes to obtain the laminated glass of Example 1. The obtained laminated glass was evaluated based on the above evaluation criteria.

[Example 2]

Four PVB sheets (253 mm long × 52 mm wide × 380 μm thick) were provided and arranged so that the outer circumference was 305 mm long × 305 mm wide and the opening was 201 mm long × 201 mm wide (see Fig. 15(b)), thereby obtaining a gap filler polymer sheet 30 (C1). Except for this, the interlayer film for laminated glass and laminated glass of Example 2 were obtained in the same manner as in Example 1.

[Example 3]

An interlayer film for laminated glass and the laminated glass of Example 3 were obtained in the same manner as in Example 1, except that a PVB sheet (305 mm long × 305 mm wide × 200 μm thick) (B3) was further provided as a third polymer sheet 50 and that lamination was carried out in the order shown in Fig. 14(b).

[Example 4]

An interlayer film for laminated glass and laminated glass of Example 4 were obtained in the same manner as in Example 1, except that the surface of the interlayer film for laminated glass was embossed so that the surface roughness ($R_{zjis94}$) of the interlayer film for laminated glass was 15 μm.

[Example 5]

An interlayer film for laminated glass and laminated glass of Example 5 were obtained in the same manner as in Example 1, except that a heat reflective film (200 mm long × 200 mm wide × 110 μm thick) was prepared as the functional film 10, and a PVB sheet (305 mm long × 305 mm wide × 110 μm thick) (A1) was prepared as the gap filler polymer sheet 30.

[Example 6]

An interlayer film for laminated glass and laminated glass of Example 6 were obtained in the same manner as in Example 1, except the following: an SPD film (200 mm long × 200 mm wide × 385 μm thick) (A2) was further provided as the second functional film 10a, a PVB sheet (305 mm long × 305 mm wide × 760 μm thick) (C1) was provided as the gap filler polymer sheet 30, and a PVB sheet (305 mm long × 305 mm wide × 380 μm thick) (B3) was provided as the third polymer sheet 20b, and then they were laminated in the order shown in Fig. 14(c).

[Comparative Example 1]

An interlayer film for laminated glass and laminated glass of Comparative Example 1 were obtained in the same manner as in Example 1, except that the gap filler polymer sheet 30 was not used (see Fig. 14(d)).

[Comparative Example 2]

An interlayer film for laminated glass and laminated glass of Comparative Example 2 were obtained in the same manner as in Example 1, except that the first polymer sheet 20a, the second polymer sheet 40, and the gap filler polymer sheet 30 were laminated as shown in Fig. 14(e).

The evaluation results are shown in Table 1.

Table 1

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| Structure of interlayer film for laminated glass | A1 | Functional film | Type | PDLC | PDLC | PDLC | PDLC | Heat reflective film | PDLC | PDLC | PDLC |
| | | | Type | 385 | 385 | 385 | 385 | 110 | 385 | 385 | 385 |
| | A2 | Second functional film | Thickness (μm) | - | - | - | - | - | SPD | - | - |
| | | | Type | - | - | - | - | - | 385 | - | - |
| | B1 | First polymer sheet | Thickness (μm) | PVB | PVB | PVB | PVB | PVB | PVB | PVB | PVB |
| | | | Type | 380 | 380 | 200 | 380 | 380 | 380 | 380 | 380 |
| | B2 | Second polymer sheet | Thickness (μm) | PVB | PVB | PVB | PVB | PVB | PVB | PVB | PVB |
| | | | Type | 380 | 380 | 380 | 380 | 380 | 380 | 380 | 380 |
| | B3 | Third polymer sheet | Thickness (μm) | - | - | PVB | - | PVB | PVB | - | - |
| | | | Type | - | - | 200 | - | - | 380 | - | - |
| | C1 | Gap filler polymer sheet | Thickness (μm) | PVB | PVB | PVB | PVB | PVB | PVB | - | PVB |
| | | | Type | 380 | 380 | 380 | 380 | 110 | 760 | - | 380 |
| | | | Thickness (μm) | Single | Divided | Single | Single | Single | Single | - | Single |
| | Lamination order | | | B2/A1/B1/C1 | B2/A1/B1/C1 | B2/A1/B1/C1/B3 | B2/A1/B1/C1 | B2/A1/B1/C1 | B2/A1/B1/A2/B3/C1 | B2/A1/B1 | B2/A1/C1/B1 |
| Surface roughness of interlayer film for laminated glass | Second polymer sheet side | | Roughness (μm) | 40 | 40 | 40 | 15 | 40 | 40 | 40 | 40 |
| | Gap filler polymer sheet side | | Roughness (μm) | 40 | 40 | 40 | 15 | 40 | 40 | 40 | 40 |

(continued)

| | | | Example 1 | Example 2 | Example 3 | Example 4 | Example 5 | Example 6 | Comparative Example 1 | Comparative Example 2 |
|---|---|---|---|---|---|---|---|---|---|---|
| Evaluation | Interlayer film for laminated glass | T1/T2 | 1.01 | 1.02 | 1.00 | 1.00 | 1.01 | 1.03 | 1.42 | 1.01 |
| | | T2/T1 | 0.99 | 0.98 | 1.00 | 1.00 | 0.99 | 0.97 | 0.70 | 0.99 |
| | | Thickness | A | A | A | A | A | A | C | A |
| | | Gap | A | A | A | A | A | A | A | B |
| | Laminated glass | Cracking | A | A | A | A | A | A | C | A |
| | | Foaming | A | A | A | B | A | A | - | C |

In the interlayer films for laminated glass of Examples 1 to 6, the gap filler polymer sheet was provided on the side opposite to the functional film side of the first polymer sheet, so it was possible to suppress the occurrence of gaps at the edge of the functional film. On the other hand, the interlayer film for laminated glass of Comparative Example 1 was able to suppress the occurrence of gaps at the edge of the functional film; however, since the interlayer film did not include a gap filler polymer sheet, a step is formed in the thickness direction. Furthermore, in the interlayer film for laminated glass of Comparative Example 2, the gap filler polymer sheet was provided on the functional film side of the first polymer sheet, so it was unable to suppress the occurrence of gaps at the edge of the functional film.

Reference Signs List

1, 1A to 1K Interlayer film for laminated glass
10, 10a Functional film
20a, 20b First polymer sheet
20b, 30a to 30d Polymer sheet
40 Second polymer sheet
30, 30A, 30C to 30G, 30I, 30J Gap filler polymer sheet
50 Third polymer sheet
60, 70 Glass plate
80 Polymer sheet
100, 100A Laminated glass

## Claims

1. An interlayer film for laminated glass, comprising a functional film and one or more first polymer sheets provided on one surface of the functional film,

    in a projected view in the thickness direction, the functional film being included in at least a region of the first polymer sheet that is in contact with the functional film, among the one or more first polymer sheets; and
    the interlayer film for laminated glass further comprising one or more gap filler polymer sheets provided on a surface on the side opposite to the functional film side of the first polymer sheet.

2. The interlayer film for laminated glass according to claim 1, wherein a surface on the gap filler polymer sheet side of the interlayer film has a surface roughness ($R_{zjis94}$) of 1 $\mu$m or more and 100 $\mu$m or less.

3. The interlayer film for laminated glass according to claim 1, further comprising a second polymer sheet provided on the other surface of the functional film.

4. The interlayer film for laminated glass according to claim 3, wherein a surface on the second polymer sheet side of the interlayer film has a surface roughness ($R_{zjis94}$) of 1 $\mu$m or more and 100 $\mu$m or less.

5. The interlayer film for laminated glass according to claim 3, wherein:

    in a projected view in the thickness direction, the distance between the outer circumference of the first polymer sheet and the outer circumference of the gap filler polymer sheet is 0 mm or more and 10 mm or less;
    in a projected view in the thickness direction, the distance between the outer circumference of the second polymer sheet and the outer circumference of the gap filler polymer sheet is 0 mm or more and 10 mm or less; and
    in a projected view in the thickness direction, the distance between the outer circumference of the first polymer sheet and the outer circumference of the second polymer sheet is 0 mm or more and 10 mm or less.

6. The interlayer film for laminated glass according to claim 1, wherein the gap filler polymer sheet comprises an opening in a region overlapping with the functional film in a projected view in the thickness direction.

7. The interlayer film for laminated glass according to claim 6, wherein the gap filler polymer sheet comprising the opening comprises a plurality of polymer sheets arranged in the planar direction.

**8.** The interlayer film for laminated glass according to claim 6, wherein, in a projected view in the thickness direction, the distance between the inner circumference of the opening of the gap filler polymer sheet and the outer circumference of the functional film is 5 mm or less over the entire circumference.

**9.** The interlayer film for laminated glass according to claim 1, wherein at least one of the first polymer sheet or the gap filler polymer sheet comprises at least one thermoplastic resin selected from the group consisting of a polyvinyl acetal resin and an ethylene-vinyl acetate copolymer resin.

**10.** The interlayer film for laminated glass according to claim 1, wherein the functional film is a film having a function of absorbing or reflecting specific light.

**11.** The interlayer film for laminated glass according to claim 1, wherein the functional film comprises a polyethylene terephthalate resin.

**12.** The interlayer film for laminated glass according to claim 1, wherein the functional film is a P-polarized reflective film, a holographic film, a heat ray reflective film, a light-controlling film, a display element film, a transparent conductive film, a touch sensor film, a circuit film, a film for solar power generation, or an electrically controllable film.

**13.** The interlayer film for laminated glass according to claim 3, wherein the second polymer sheet comprises at least one thermoplastic resin selected from the group consisting of a polyvinyl acetal resin and an ethylene-vinyl acetate copolymer resin.

**14.** The interlayer film for laminated glass according to claim 1, further comprising a third polymer sheet provided on a surface on the side opposite to the first polymer sheet side of the gap filler polymer sheet.

**15.** The interlayer film for laminated glass according to claim 3, wherein a surface on the gap filler polymer sheet side of the interlayer film and a surface on the second polymer sheet side of the interlayer film have regularly shaped or randomly shaped unevenness.

**16.** The interlayer film for laminated glass according to claim 3, wherein at least one of a surface on the gap filler polymer sheet side or a surface on the second polymer sheet side is protected with a protective release film.

**17.** A method for producing the interlayer film for laminated glass according to any one of claims 1 to 16, comprising a step of laminating a functional film, a first polymer sheet, and a gap filler polymer sheet such that the functional film, the first polymer sheet, and the gap filler polymer sheet are arranged in this order.

**18.** A laminated glass, comprising a pair of glass plates and the interlayer film for laminated glass according to any one of claims 1 to 16 provided between the pair of glass plates.

Fig. 1

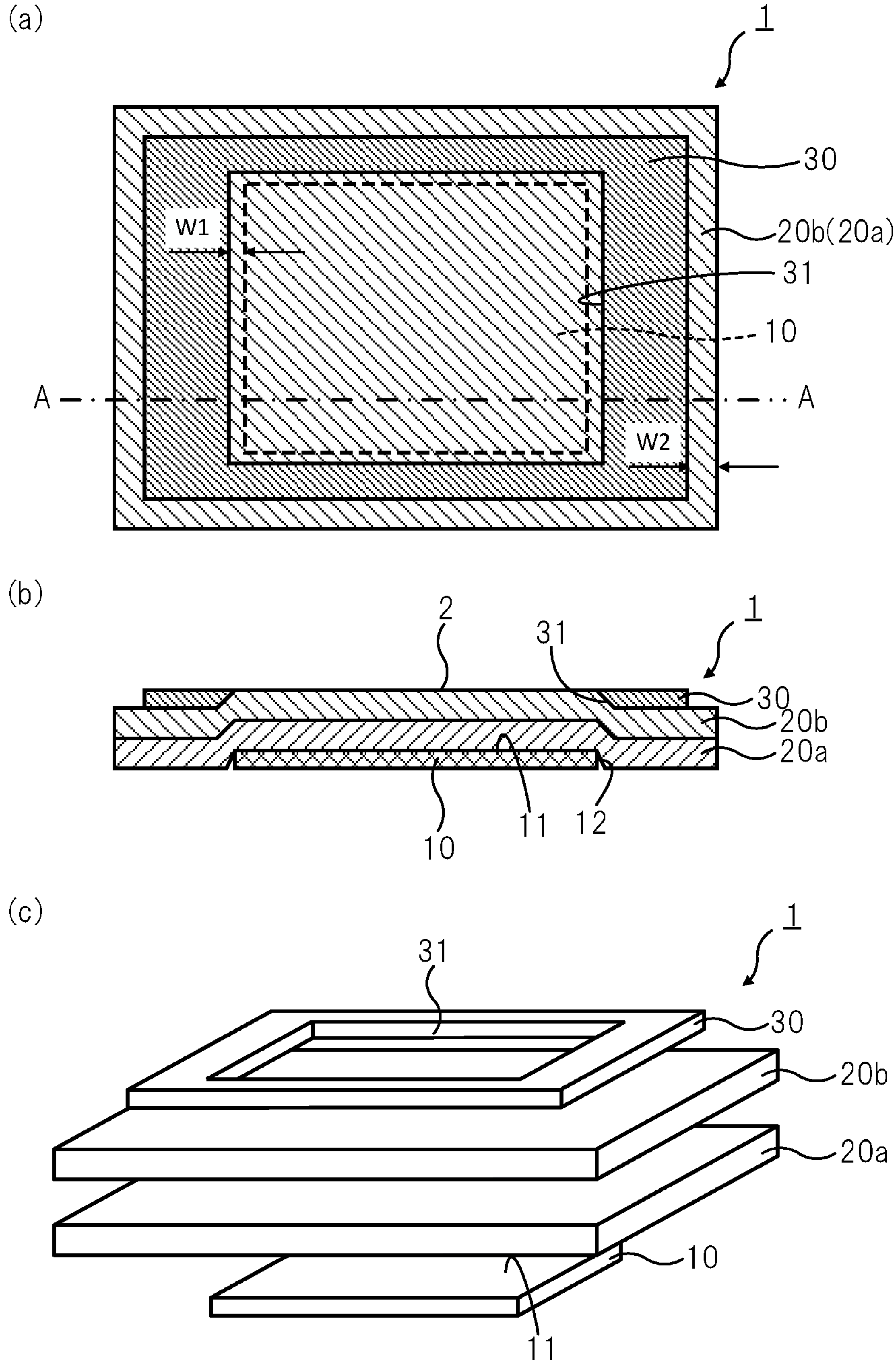
(a)
1
30
20b(20a)
31
10
W1
W2
A
A
(b)
2
31
1
30
20b
20a
10
11
12
(c)
31
1
30
20b
20a
10
11

Fig. 2

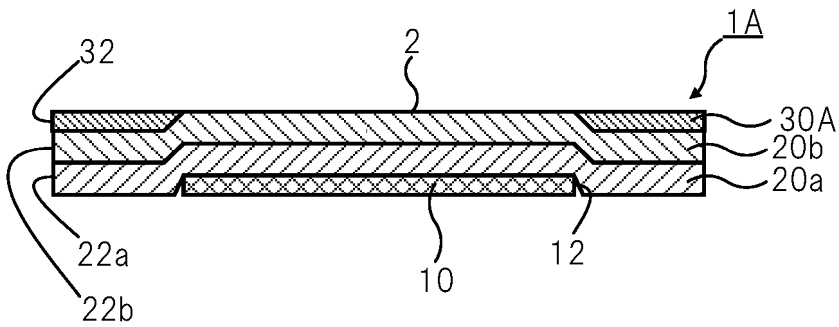

Fig. 3

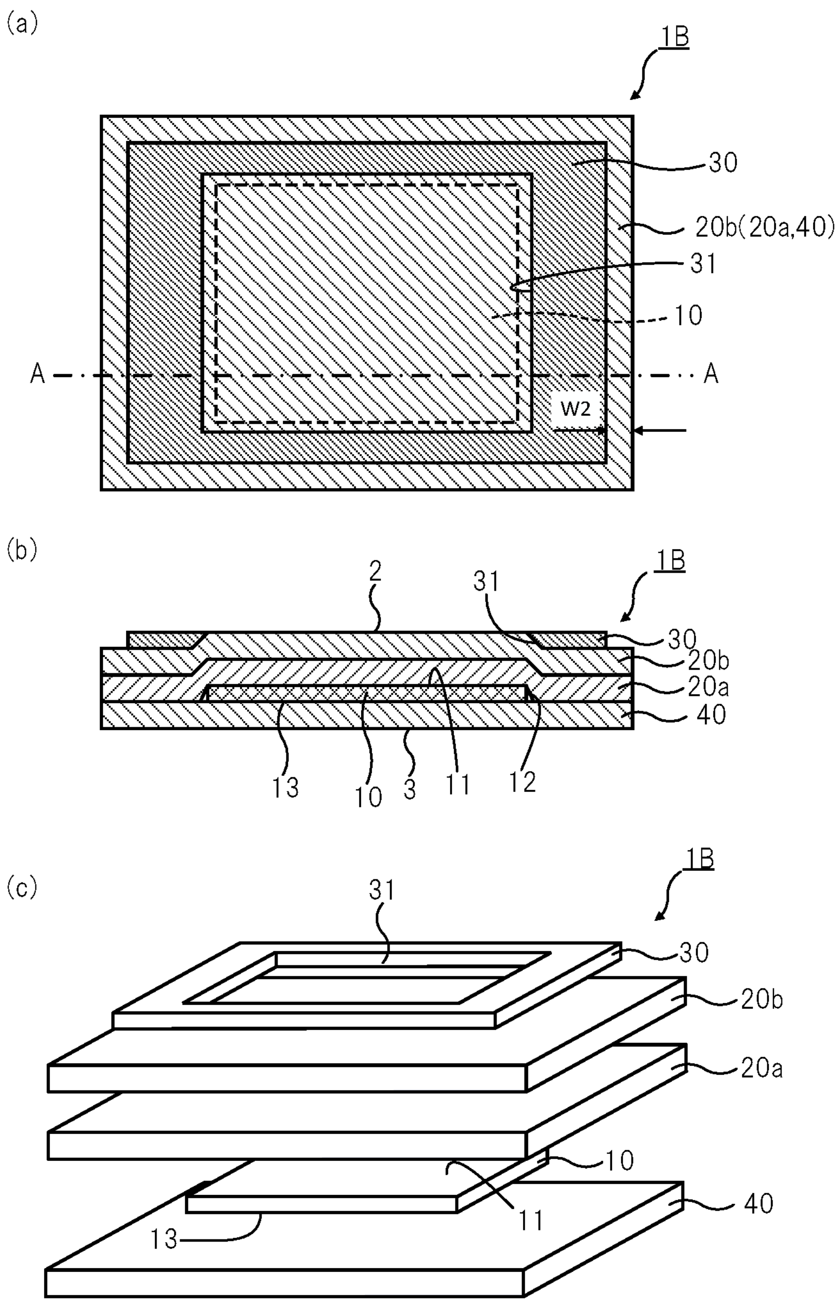
(a)
1B
30
20b(20a,40)
31
10
A
A
W2
(b)
2
31
1B
30
20b
20a
40
13
10
3
11
12
(c)
1B
31
30
20b
20a
10
40
13
11

Fig. 4

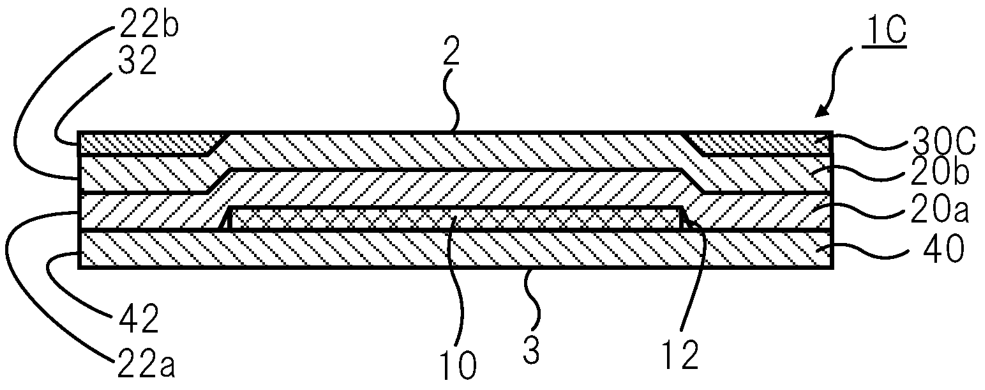


Fig. 5

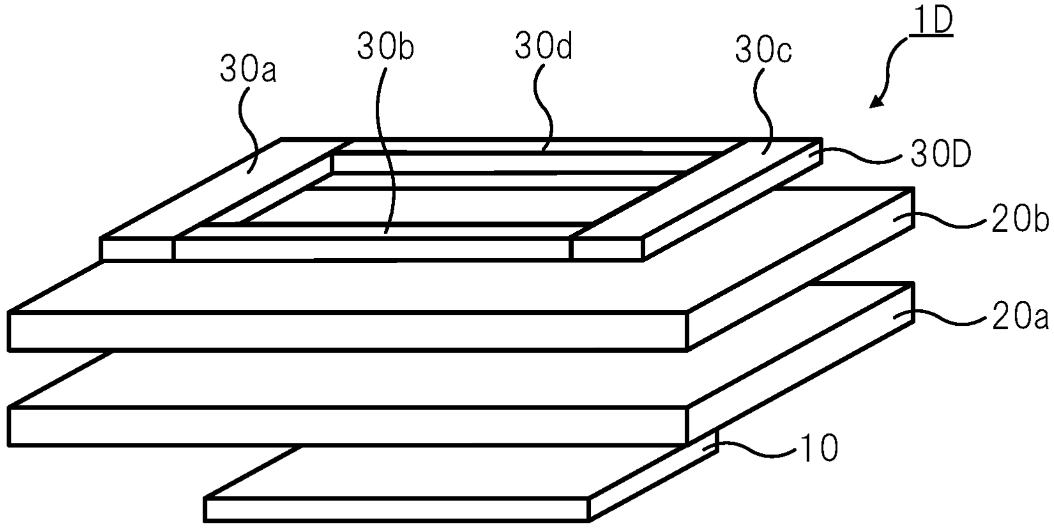


Fig. 6

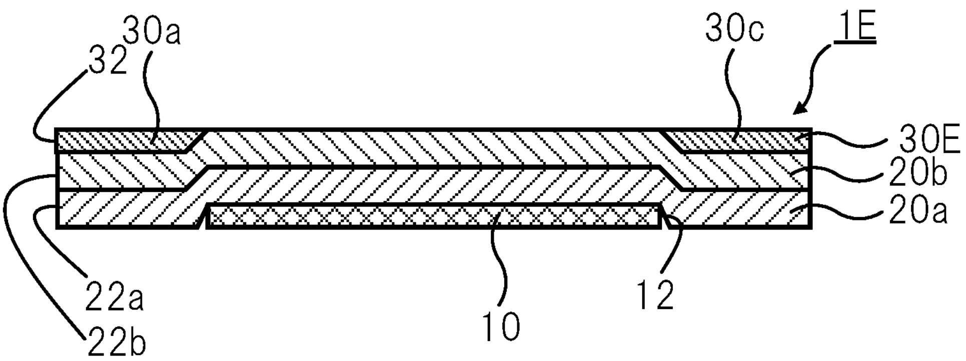

Fig. 7

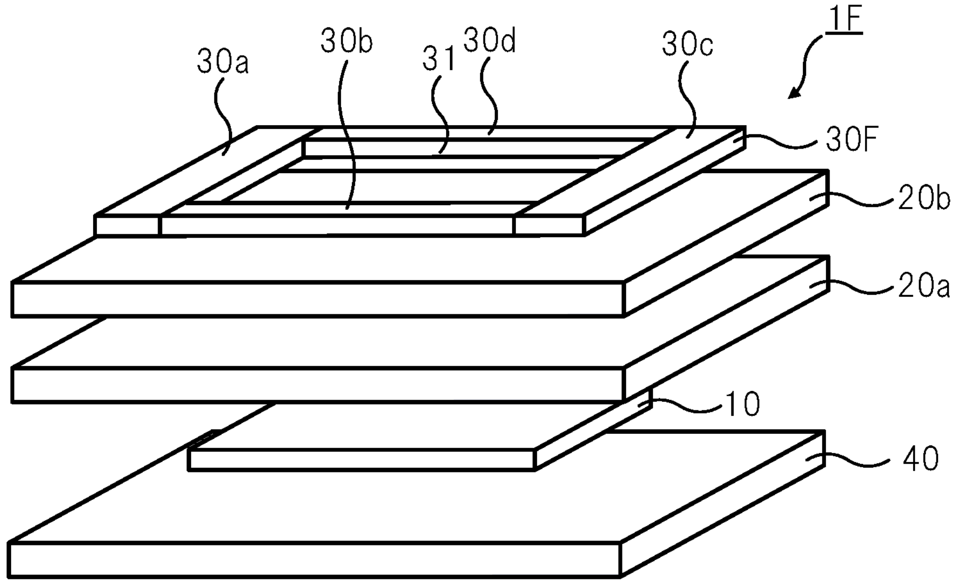
1F
30a
30b
31
30d
30c
30F
20b
20a
10
40

Fig. 8

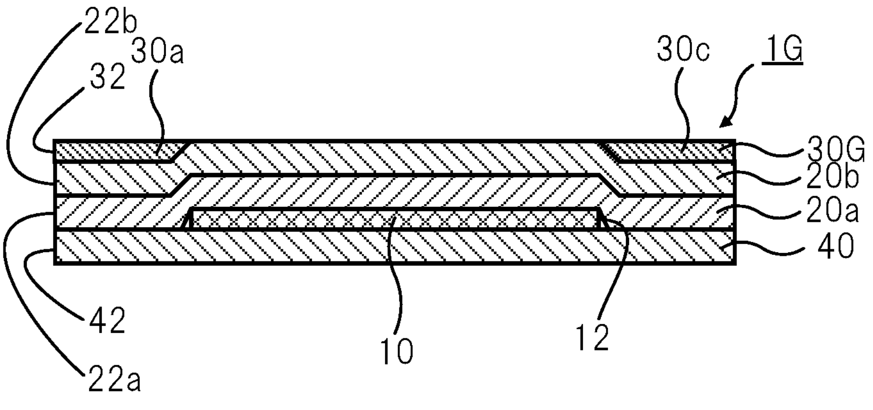
22b
30a
32
30c
1G
30G
20b
20a
40
42
10
12
22a

Fig. 9

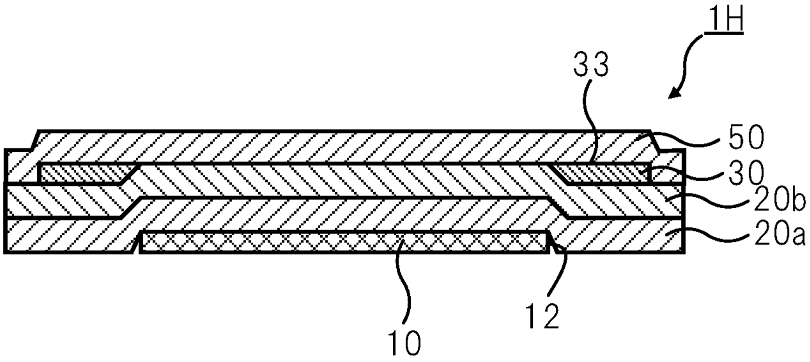


Fig. 10

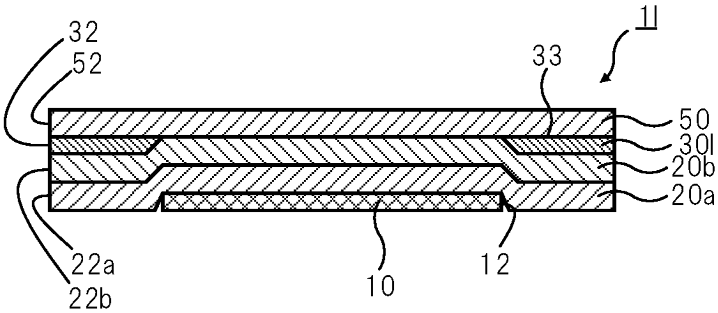


Fig. 11

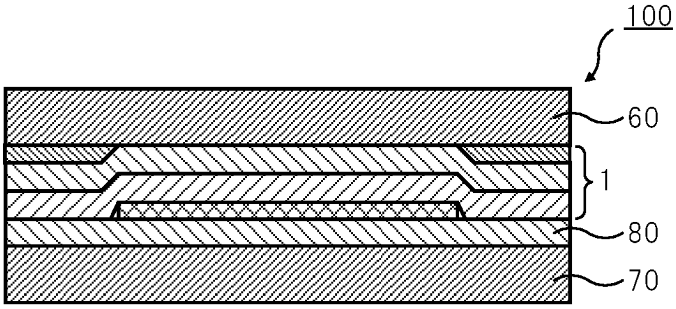

Fig. 12

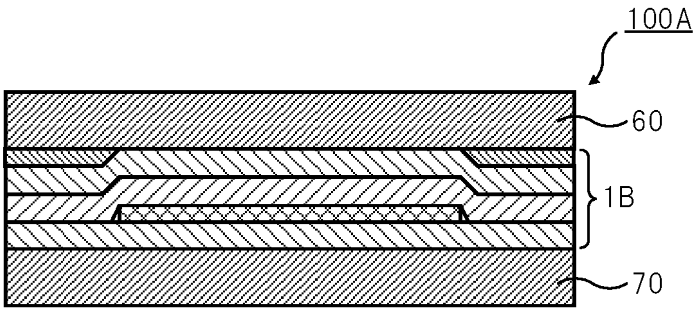


Fig. 13

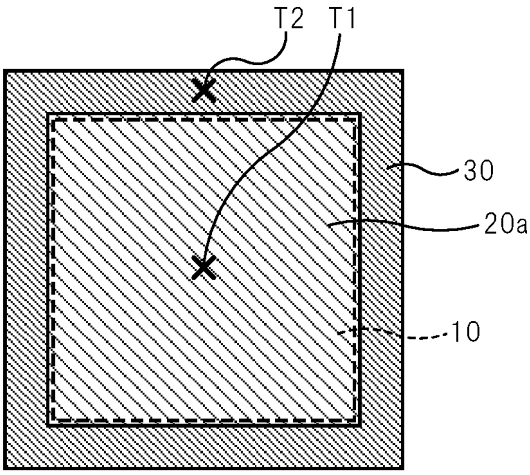

Fig. 14

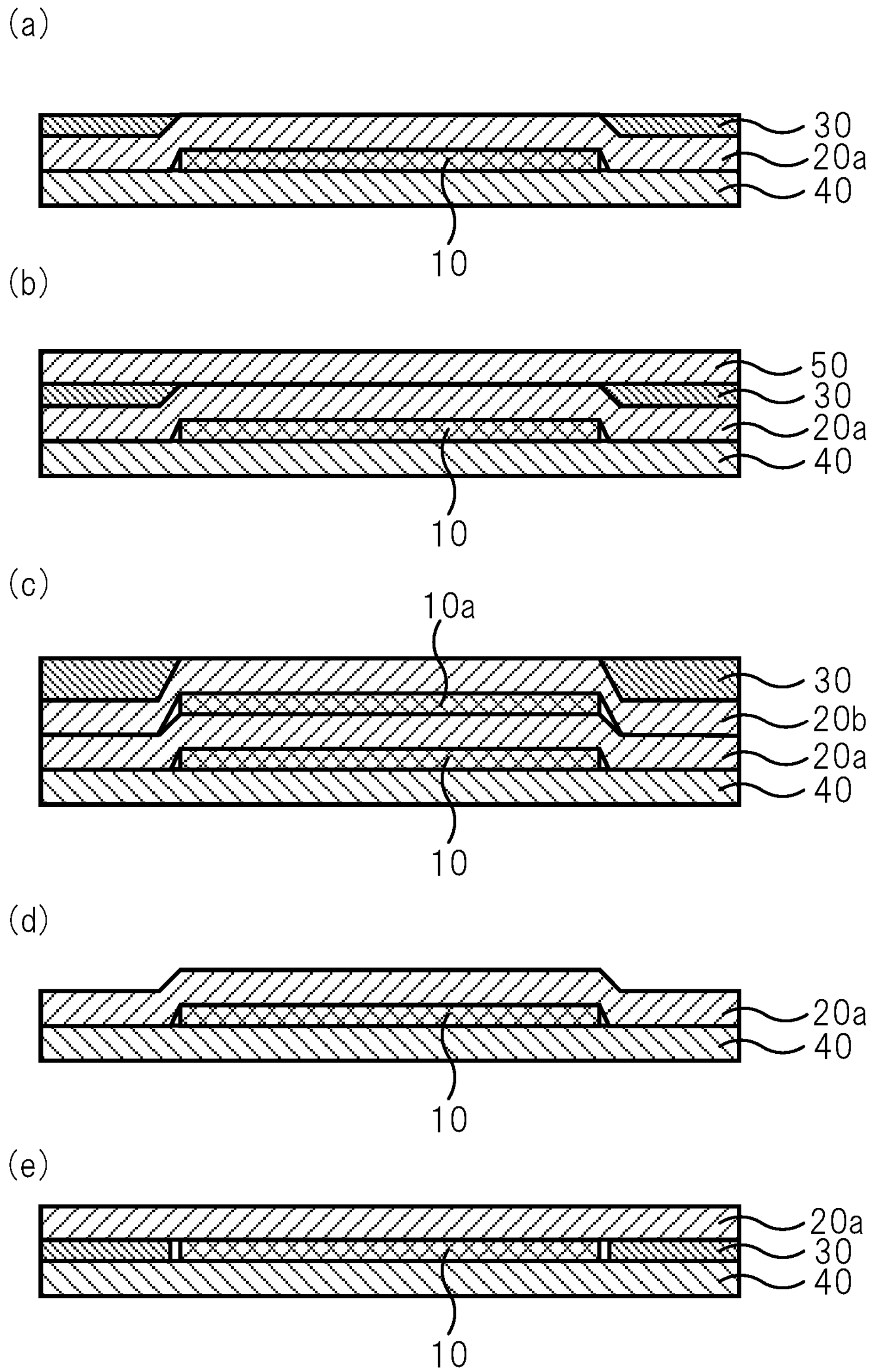
(a)
30
20a
40
10
(b)
50
30
20a
40
10
(c)
10a
30
20b
20a
40
10
(d)
20a
40
10
(e)
20a
30
40
10

Fig. 15

(a)

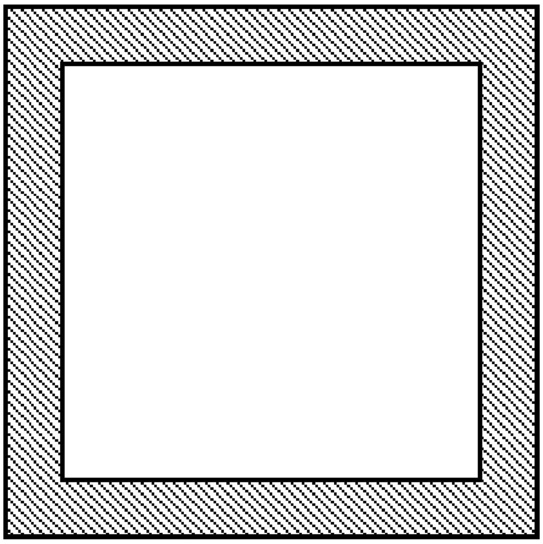

(b)

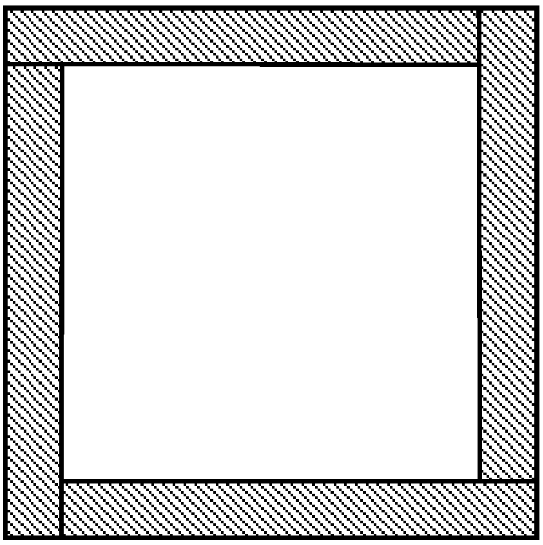

Fig. 16

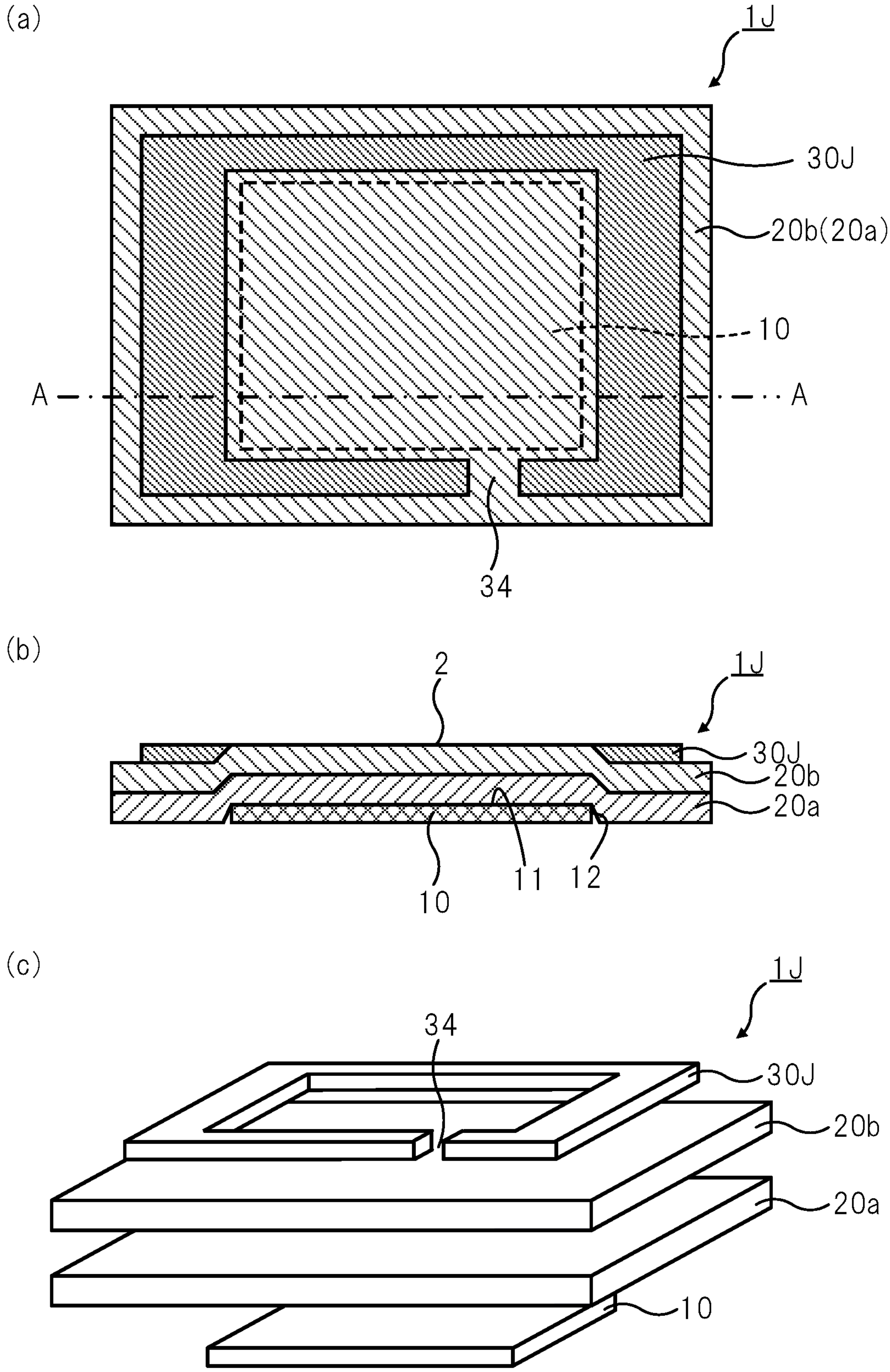
(a)
1J
30J
20b(20a)
10
A
A
34
(b)
2
1J
30J
20b
20a
10
11
12
(c)
1J
34
30J
20b
20a
10

Fig. 17

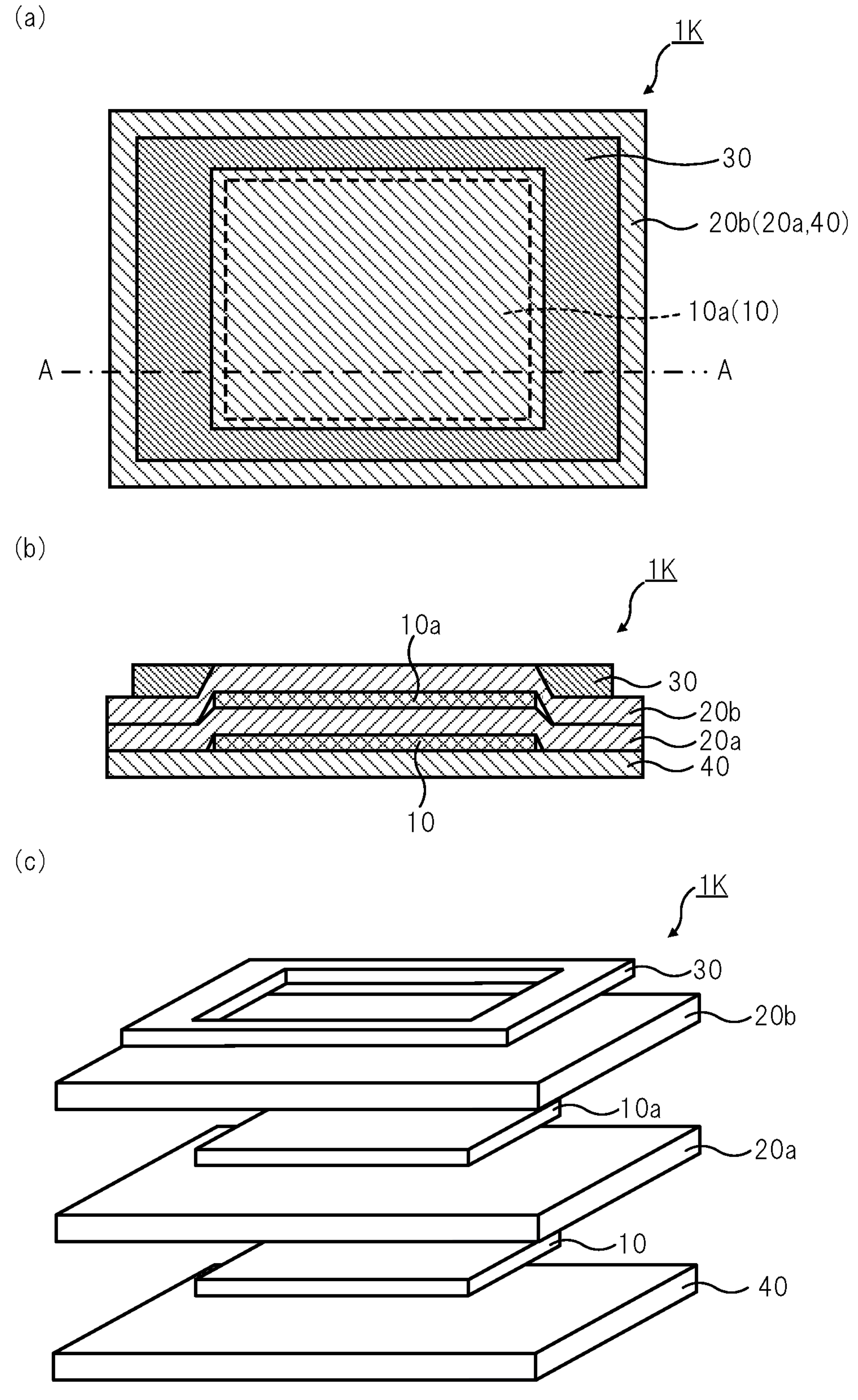
(a)
1K
30
20b(20a,40)
10a(10)
A
A
(b)
1K
10a
30
20b
20a
40
10
(c)
1K
30
20b
10a
20a
10
40

## INTERNATIONAL SEARCH REPORT

International application No.
**PCT/JP2024/029713**

**A. CLASSIFICATION OF SUBJECT MATTER**

***C03C 27/12***(2006.01)i
FI: C03C27/12 N; C03C27/12 C; C03C27/12 E; C03C27/12 K; C03C27/12 L

According to International Patent Classification (IPC) or to both national classification and IPC

**B. FIELDS SEARCHED**

Minimum documentation searched (classification system followed by classification symbols)

C03C27/00-29/00; B32B17/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2021-513502 A (SAINT-GOBAIN GLASS FRANCE) 27 May 2021 (2021-05-27)<br>paragraphs [0003], [0083]-[0089], [0109], [0115], [0119]-[0122], fig. 1A-1D, 5A-5B | 1, 3, 5-6, 9-14, 17-18<br><br>2, 4, 7-8, 15-18 |
| Y | WO 2017/135470 A1 (KURARAY CO., LTD.) 10 August 2017 (2017-08-10)<br>paragraphs [0129]-[0132] | 2, 4, 15, 17-18 |
| Y | JP 2022-140449 A (DAI NIPPON PRINTING CO., LTD.) 26 September 2022 (2022-09-26)<br>paragraphs [0040], [0066], fig. 12 | 7-8, 17-18 |
| Y | JP 08-012383 A (SEKISUI CHEMICAL CO., LTD.) 16 January 1996 (1996-01-16)<br>paragraphs [0047]-[0048] | 16-18 |
| A | JP 2022-109495 A (DAI NIPPON PRINTING CO., LTD.) 28 July 2022 (2022-07-28)<br>entire text | 1-18 |
| A | JP 10-086263 A (KANEGAFUCHI CHEM IND CO., LTD.) 07 April 1998 (1998-04-07)<br>entire text | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/029713**

| Patent document cited in search report | Publication date (day/month/year) | Patent family member(s) | Publication date (day/month/year) |
|---|---|---|---|
| JP 2021-513502 A | 27 May 2021 | WO 2019/166155 A1<br>EP 3758936 A1<br>CN 110418713 A<br>KR 10-2020-0110704 A<br>MA 52408 A | |
| WO 2017/135470 A1 | 10 August 2017 | US 2019/0054723 A1<br>paragraphs [0143]-[0146]<br>EP 3412450 A1<br>CN 108602333 A<br>KR 10-2018-0111929 A<br>JP 2017-136805 A<br>JP 2017-136806 A<br>JP 2017-136807 A | |
| JP 2022-140449 A | 26 September 2022 | US 2021/0103174 A1<br>paragraphs [0065], [0091], fig. 12<br>US 2023/0152634 A1<br>WO 2019/026849 A1<br>EP 3663269 A1<br>KR 10-2020-0035410 A<br>CN 111051264 A<br>KR 10-2023-0010851 A<br>KR 10-2024-0064046 A<br>JP 2023-165720 A | |
| JP 08-012383 A | 16 January 1996 | (Family: none) | |
| JP 2022-109495 A | 28 July 2022 | (Family: none) | |
| JP 10-086263 A | 07 April 1998 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009534283 A